# EUROPEAN PATENT APPLICATION

(11) **EP 3 007 310 A2**
(43) Date of publication of application: **13.04.2016**
(21) Application number: 15186248.9
(22) Date of filing: 22.09.2015
(51) Int. Cl.: H02J 7/00, G01R 31/36

(54) **POWER-STORAGE-SYSTEM CONTROL METHOD AND POWER-STORAGE-SYSTEM CONTROL APPARATUS**

(30) Priority: 08.10.2014 JP 2014207511
(71) Applicant: Panasonic Intellectual Property Management Co., Ltd., Osaka-shi, Osaka 540-6207 (JP)
(72) Inventor: YAMAGUCHI, Takao, Osaka-shi, Osaka 540-6207 (JP); HANAFUSA, Hiroshi, Osaka-shi, Osaka 540-6207 (JP)
(74) Representative: Grünecker Patent- und Rechtsanwälte PartG mbB

(57) **Abstract**

A power-storage-system control method includes: obtaining pieces of parameter information indicating respective states of assembled batteries (34); determining respective degradation levels of the assembled batteries (34) by using the obtained pieces of parameter information; grouping the assembled batteries (34) into a plurality of groups, based on the determined degradation levels; and executing at least one of first control and second control. In the first control, group designation is performed in first descending order of priorities defined for the groups and corresponding to the degradation levels, and the assembled batteries belonging to the designated group are charged. In the second control, group designation is performed in second descending order of priorities defined for the groups and corresponding to the degradation levels, and the assembled batteries (34) belonging to the designated group are discharged.

## Description

### BACKGROUND

### 1. Technical Field

The present disclosure relates to a power-storage-system control method and a power-storage-system control apparatus.

### 2. Description of the Related Art

When even one of a plurality of assembled batteries included in a power storage system degrades to a level lower than a degradation reference, the power storage system becomes unusable. However, not all of the assembled batteries included in the power storage system degrade to the same extent, and the performance of the power storage system is determined by the assembled battery having the highest degradation among the assembled batteries. Thus, even when some of the assembled batteries included in the power storage system have low degradation and are sufficiently usable, if one of the assembled batteries has high degradation, the power storage system stops operating and becomes unusable, and therefore, the usability is low.

In order to address such a problem, technology for improving the life of a storage battery in which a plurality of secondary cells are connected in parallel has been proposed (see, for example, Japanese Unexamined Patent Application Publication No. 2009-44862). Specifically, the battery degradation indices of secondary cells are compared with each other, and charging/discharging power required for each secondary cell is set so that the charging/discharging power for the secondary cell whose battery degradation index is small increases and the charging/discharging power for the secondary cell whose battery degradation index is large decreases, thereby increasing the life of the storage battery.

The above-described technology for controlling the power storage system having the plurality of assembled batteries in the related art has room for improvement.

### SUMMARY

One non-limiting and exemplary embodiment provides, for a power storage system having a plurality of assembled batteries, a power-storage-system control method and a power-storage-system control apparatus which are improved over the related art.

In one general aspect, the techniques disclosed here feature a power-storage-system control method for a power storage system having a plurality of assembled batteries. The method includes: obtaining parameter information indicating respective states of the assembled batteries; determining respective degradation levels of the assembled batteries by using the obtained parameter information; grouping the assembled batteries into a plurality of groups, based on the determined degradation levels; and executing at least one of first control and second control. In the first control, group designation is performed in first descending order of priorities defined for the groups and corresponding to the degradation levels, and the assembled batteries belonging to the designated group are charged, and in the second control, group designation is performed in second descending order of priorities defined for the groups and corresponding to the degradation levels, and the assembled batteries belonging to the designated group are discharged.

According to the present disclosure, it is possible to provide a power-storage-system control method and a power-storage-system control apparatus which are improved over the related art.

It should be noted that general or specific embodiments may be implemented as a system, an apparatus, a device, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

FIG. 1 is a block diagram of a distributed power storage system in a first embodiment;
FIG. 2 illustrates assembled batteries included in a power storage system in the first embodiment;
FIG. 3 is a diagram of a hardware configuration in the first embodiment.
FIG. 4A is a functional block diagram of a control unit in a cloud server in the first embodiment;
FIG. 4B is a functional block diagram of a control unit in a controller in the first embodiment;
FIG. 4C is a functional block diagram of a BMU in the power storage system in the first embodiment;
FIG. 5 illustrates a table of grouping according to degradation levels in the first embodiment;
FIG. 6 is a table illustrating control of the assembled batteries which is set according to groups in the first embodiment;
FIG. 7 is a sequence diagram illustrating a flow of overall processing in the first embodiment;
FIGS. 8A and 8B illustrate a flowchart of a method for selecting, in the first embodiment, the assembled batteries to be operated and the assembled batteries not to be operated;
FIG. 9 is a table illustrating selection of the assembled batteries in the first embodiment;
FIG. 10 is a table illustrating assignment of the amounts of discharge in the assembled batteries selected in the first embodiment;
FIG. 11 is a block diagram of a distributed power storage system in a second embodiment;
FIG. 12 illustrates power storage systems controlled by an MBMU in the second embodiment;
FIG. 13 is a functional block diagram of a control unit in a cloud server in the second embodiment;
FIG. 14 is a sequence diagram illustrating a flow of overall processing in the second embodiment;
FIGS. 15A and 15B illustrate a flowchart of a method for selecting, in the second embodiment, the power storage systems to be operated and the power storage systems not to be operated; and
FIG. 16 illustrates an example of adjustment with loads.

### DETAILED DESCRIPTION

### (Background That Led to Aspect According to Present Disclosure)

Power storage systems are expected to be provided in apartment buildings, factories, or the like, for example, for backup-power supply during power failure of a commercial power supply, peak shaving or peak shifting, demand response, and ensuring an operating reserve for power. In particular, in power storage systems, there are demands for a storage-battery control technology that allows long life operation and that facilitates replacement of assembled batteries. Even when one of a plurality of assembled batteries included in a power storage system degrades to a level lower than a degradation reference (for example, when a state of health (SOH) becomes lower than 60%), the power storage system stops operating and becomes unusable. However, not all of the assembled batteries included in the power storage system degrade to the same extent, and even when some of the assembled batteries included in the power storage system have low degradation and are sufficiently usable, if one of the assembled batteries has high degradation, the power storage system stops operating and becomes unusable, and therefore, the usability is low.

For example, the technology in Japanese Unexamined Patent Application Publication No. 2009-44862 is predicated on the operations of all assembled batteries, and thus, even under a situation in which any of the assembled batteries degrades, all of the assembled batteries operate, and the assembled batteries degrade unnecessarily. Also, as the number of assembled batteries increases, the number of assembled batteries that degrade unnecessarily increases, and the frequency of replacing the assembled batteries increases, thus taking time and effort for replacing the assembled batteries.

In order to reduce the frequency of replacing the assembled batteries and reduce the time and effort for replacing the assembled batteries by performing assembled-battery management with which unnecessary battery degradation is suppressed, it is necessary to allow selection of assembled batteries to be operated and assembled batteries not to be operated. An increase in the number of assembled batteries makes it difficult to determine the number of assembled batteries to be operated. There are also demands for assembled-battery management with another approach, not the assembled-battery management with which unnecessary battery degradation is suppressed. One example is to allow an assembled battery that has degraded to be replaced with high priority.

With respect to the fact that an increase in the number of assembled batteries makes it difficult to determine the number of assembled batteries to be operated, the inventors of the present disclosure made it easier to select the assembled batteries to be operated and the assembled batteries not to be operated, by grouping the assembled batteries. This makes it easier to apply the present disclosure to a large-scale power storage system.

More specifically, a first aspect of the present disclosure provides a power-storage-system control method for a power storage system having a plurality of assembled batteries. The method includes: obtaining parameter information indicating respective states of the assembled batteries; determining respective degradation levels of the assembled batteries by using the obtained pieces of parameter information; grouping the assembled batteries into a plurality of groups, based on the determined degradation levels; and executing at least one of first control and second control. In the first control, group designation is performed in first descending order of priorities defined for the groups and corresponding to the degradation levels, and the assembled batteries belonging to the designated group are charged, and in the second control, group designation is performed in second descending order of priorities defined for the groups and corresponding to the degradation levels, and the assembled batteries belonging to the designated group are discharged.

With this arrangement, in a large-scale power storage system having a large number of assembled batteries, assembled-battery control considering the life thereof can be more easily performed compared with the related art. Thus, it is possible to enhance the usability of the power storage system.

In this case, the priorities corresponding to the degradation levels are arbitrarily set. For example, the priority may be increased as the degradation level decreases, or the priority may be increased as the degradation level increases. When the priority is increased as the degradation level increases, unbalance degradation of the assembled batteries is alleviated, thus allowing the power storage system to operate for a longer period of time. When the priority is increased as the degradation level increases, the life of an assembled battery that has degraded is shortened, thus promoting replacement of the assembled battery that has degraded.

A second aspect of the present disclosure may provide, in the first aspect described above, a power-storage-system control method in which, in the first control, a group included in the plurality of groups is designated in the first descending order of the priorities until predetermined charging power is obtained in the power storage system, and in the second control, a group included in the plurality of groups is designated in the second descending order of the priorities until predetermined discharging power is obtained in the power storage system.

With this arrangement, since the group included in the plurality of groups is designated in the first descending order of priorities until the predetermined charging power is obtained, assembled-battery control considering the life of the assembled battery can be performed, thus making it possible to enhance the usability of the power storage system. Also, since the group included in the plurality of groups is designated in the second descending order of priorities until the predetermined discharging power is obtained, assembled battery control considering the life of the assembled battery can be performed, thus making it possible to enhance the usability of the power storage system.

A third aspect of the present disclosure may provide, in the second aspect described above, a power-storage-system control method in which, in the first control, charging power values are set for the assembled batteries in each designated group, the charging power values being set larger for the assembled batteries belonging to the group whose priority is higher among the designated groups, and in the second control, discharging power values are set for the assembled batteries in each designated group, the discharging power values being set larger for the assembled batteries belonging to the group whose priority is higher among the designated groups.

The control method makes it possible to perform assembled-battery control considering the life of the assembled batteries, thus making it possible to enhance the usability of the power storage system.

A fourth aspect of the present disclosure may provide, in the second or third aspect described above, a power-storage-system control method in which, in the second control, the assembled batteries belonging to a first group whose priority is highest are operated, a determination is made as to whether or not power that is suppliable from the power storage system satisfies power required by a load, a second group whose priority is lower than the priority of the first group is designated when the suppliable power does not satisfy the power required by the load, and the assembled batteries belonging to the designated first group and second group are used to discharge power.

With this arrangement, the assembled batteries in a minimum number of groups are selected in order to satisfy the power required by the load, and assembled-battery control considering the life of the assembled batteries can be performed. Thus, it is possible to enhance the usability of the power storage system.

A fifth aspect of the present disclosure may provide, in one of the first to fourth aspects described above, a power-storage-system control method in which, during supply of power from the power storage system to a load, when the power supplied from the power storage system becomes lower than power required by the load, the power supply to the load is stopped.

With this arrangement, when the power supplied from the power storage system becomes lower than the power required by the load, the power supply to the load can be stopped.

A sixth aspect of the present disclosure may provide, in one of the first to fourth aspects described above, a power-storage-system control method in which, during supply of power from the power storage system to a plurality of loads, when the power supplied from the power storage system becomes lower than power required by the plurality of loads, the power supply to the load included in the plurality of loads is stopped in ascending order of priorities defined for the plurality of loads.

With this arrangement, when the power supplied from the power storage system becomes lower than the power required by the loads, the power supply to the load in which the priority defined by the user is low can be stopped, and the power can be stably supplied to each load whose priority is high.

A seventh aspect of the present disclosure may provide, in one of the first to sixth aspects described above, a power-storage-system control method in which, in at least one of the first control and the second control, of the assembled batteries belonging to the designated group, an assembled battery whose parameter information satisfies a predetermined condition is selected as an assembled battery to be operated.

With this arrangement, control considering the life of the assembled batteries can be realized compared with a case in which all of the assembled batteries belonging to the same group are operated.

An eighth aspect of the present disclosure may provide, in one of the first to seventh aspects described above, a power-storage-system control method in which an assembled battery whose at least one of a temperature, a state of charge (SOC), a last charging time, and a last discharging time satisfies a predetermined condition is selected as an assembled battery to be operated, the temperature, the SOC, the last charging time, and the last discharging time being included in the parameter information.

This control method makes it possible to appropriately control the power storage system. For example, it is possible to suppress unnecessary degradation of the assembled batteries. Alternatively, it is possible to shorten the life of an assembled battery that has degraded, thus making it possible to promote replacement of the assembled battery.

A ninth aspect of the present disclosure may provide, in one of the first to eighth aspects described above, a power-storage-system control method in which, in the first control, in setting of charging power values for the assembled batteries, the charging power values for the assembled batteries belonging to the same group are set so that SOCs of the assembled batteries become equal to each other, and in the second control, in setting of discharging power values for the assembled batteries, the discharging power values for the assembled batteries belonging to the same group are set so that SOCs of the assembled batteries become equal to each other.

With this arrangement, the assembled batteries do not degrade unnecessarily.

A tenth aspect of the present disclosure may provide, in one of the first to ninth aspects described above, a power-storage-system control method in which a frequency of obtaining the parameter information from the assembled batteries belonging to the group having a higher degradation level among the plurality of groups is increased.

With this arrangement, since the frequency of obtaining the parameter information from the assembled batteries in a group having low safety and having a high degradation level is increased, it is possible to enhance the safety of the power storage system.

An 11th aspect of the present disclosure may provide, in one of the first to tenth aspects described above, a power-storage-system control method in which, during supply of power from the power storage system to a load, when a degradation level of at least one operating assembled battery of the assembled batteries included in the power storage system exceeds a predetermined threshold, a notification indicating that the degradation level of the at least one assembled battery has exceeded the predetermined threshold is issued, an instruction indicating whether the power supply from the power storage system to the load is to be continued or stopped is received, and the power supply from the power storage system to the load is continued or stopped in accordance with the received instruction.

With this arrangement, the user can know that the degradation level of the assembled battery has exceeded the predetermined threshold. The user can also give the instruction indicating whether the power supply from the power storage system to the load is to be continued or stopped.

A 12th aspect of the present disclosure may provide, in the 11th aspect described above, a power-storage-system control method in which, when the power supply from the power storage system to the load is continued, the discharging power values set for the assembled batteries are maintained or the discharging power value for the at least one assembled battery whose degradation level exceeds the predetermined threshold is set to a first value and the discharging power value for the assembled battery that is included in the plurality of assembled batteries and whose degradation level does not exceed the predetermined threshold is set to a second value lager than the first value.

With this arrangement, the power supply from an assembled battery, which is not usually operated, to the load can be continued.

A 13th aspect of the present disclosure may provide, in the first to 12th aspects described above, a power-storage-system control method in which an instruction indicating whether at least one of charging power values and discharging power values for the assembled batteries belonging to the group having a higher degradation level among the plurality of groups is to be set small or large is received, and in accordance with the received instruction, at least one of the charging power values and the discharging power values is set.

With this arrangement, the user can issue the instruction indicating whether at least one of the charging power values and the discharging power values of the assembled batteries is to be set small or large, depending on the application.

A 14th aspect of the present disclosure provides a power-storage-system control method for controlling, through a communications network, power storage systems arranged in a distributed manner. This method includes: obtaining pieces of first parameter information indicating respective states of the power storage systems; determining respective degradation levels of the power storage systems by using the obtained pieces of first parameter information; grouping the power storage systems into a plurality of groups, based on the determined degradation levels; and executing at least one of first control and second control. In the first control, group designation is performed in first descending order of priorities defined for the groups of the power storage systems and corresponding to the degradation levels, the power storage systems belonging to the designated group are charged, and in the second control, group designation is performed in second descending order of priorities defined for the groups of the power storage systems and corresponding to the degradation levels, and the power storage systems belonging to the designated group are discharged.

With this arrangement, since power-storage-system control considering the life of the power storage systems can be performed, it is possible to enhance the usability of the entire plurality of power storage systems.

A 15th aspect of the present disclosure may provide, in the 14th aspect described above, a power-storage-system control method in which pieces of second parameter information indicating respective states of assembled batteries included in each of the power storage systems are obtained from the assembled batteries; respective second degradation levels of the assembled batteries are determined using the obtained pieces of second parameter information; the assembled batteries are grouped into a plurality of groups, based on the degradation levels determined for the respective assembled batteries; and at least one of first control and second control is executed. In the first control, group designation is performed in the first descending order of priorities defined for the groups of the assembled batteries and corresponding to the degradation levels, and the assembled batteries belonging to the designated assembled-battery group are charged, and in the second control, group designation is performed in the second descending order of priorities defined for the groups of the assembled batteries and corresponding to the degradation levels, and the assembled batteries belonging to the designated assembled-battery group are discharged.

With this arrangement, since power-storage-system control considering the life of the assembled batteries can be performed, it is possible to enhance the usability of the entire plurality of power storage systems.

A 16th aspect of the present disclosure may provide, in the 14th or 15th aspect described above, a power-storage-system control method in which a power storage system for backup which is included in the plurality of power storage systems is operated in a range of a maximum operation rate of the backup power storage system so that predetermined discharging power is obtained in the entire plurality of power storage systems.

With this arrangement, any of the power storage systems can be used as a backup power storage system.

A 17th aspect of the present disclosure may provide, in the 16th aspect described above, a power-storage-system control method in which, when the predetermined discharging power is not obtained in the entire plurality of power storage systems, the maximum operation rate of the backup power storage system is changed so that the predetermined discharging power is obtained in the entire plurality of power storage systems.

With this arrangement, when the predetermined discharging power is not obtained in the entire plurality of power storage systems, it is possible to obtain the predetermined discharging power by changing the maximum operation rate of the backup power storage system.

An 18th aspect of the present disclosure provides a power-storage-system control apparatus for controlling, through a communications network, power storage systems arranged in a distributed manner. The apparatus includes: a first parameter obtainer that obtains pieces of first parameter information indicating respective states of the power storage systems; a first degradation determiner that determines respective degradation levels of the power storage systems by using the obtained pieces of first parameter information and that groups the power storage systems into a plurality of groups, based on the degradation levels; and a first controller that executes at least one of first control and second control. In the first control, group designation is performed in first descending order of priorities defined for the groups of the power storage systems and corresponding to the degradation levels, the power storage systems belonging to the designated group are charged, and in the second control, group designation is performed in second descending order of priorities defined for the groups of the power storage systems and corresponding to the degradation levels, and the power storage systems belonging to the designated group are discharged.

With this arrangement, in a large-scale power storage system, since power-storage-system control considering the life of the power storage systems can be performed, it is possible to enhance the usability of the entire plurality of power storage systems.

A 19th aspect of the present disclosure provides a power-storage-system control apparatus for controlling a power storage system having a plurality of assembled batteries. The apparatus includes: a second parameter obtainer that obtains pieces of second parameter information indicating respective states of the assembled batteries; a second degradation determiner that determines respective degradation levels of the assembled batteries by using the obtained pieces of second parameter information and that groups the assembled batteries into a plurality of groups, based on the degradation levels; and a second controller that executes at least one of first control and second control. In the first control, group designation is performed in first descending order of priorities defined for the groups of the assembled batteries and corresponding to the degradation levels, and the assembled batteries belonging to the designated group are charged, and in the second control, group designation is performed in second descending order of priorities defined for the groups of the assembled batteries and corresponding to the degradation levels, and the assembled batteries belonging to the designated group are discharged.

With this arrangement, in a large-scale power storage system, since assembled-battery control considering the life of the assembled batteries can be performed, it is possible to enhance the usability of the power storage system.

Embodiments will be described below in detail with reference to the accompanying drawings.

The embodiments described below all represent general or specific examples. Numerical values, constituent elements, the arrangement positions and connections of the constituent elements, steps, an order of steps, and so on described below in the embodiments are merely examples and are not intended to limit the present disclosure. Of the constituent elements in the embodiments described below, constituent elements not set forth in the independent claims that represent the broadest concept will be described as optional constituent elements.

### (First Embodiment)

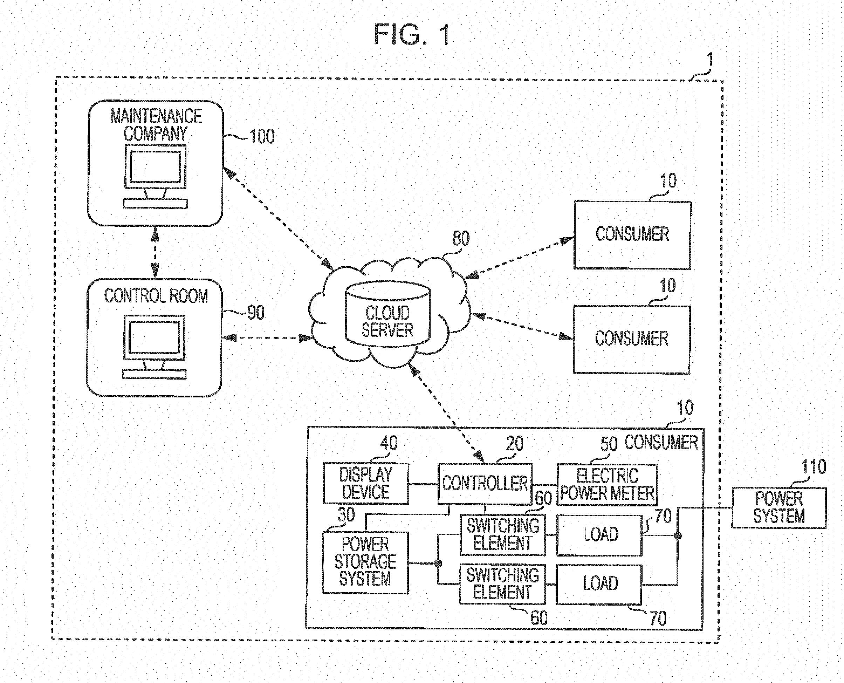

A first embodiment will be described below with reference to FIGS. 1 to 10.

FIG. 1 is a block diagram of a distributed power storage system 1 in the first embodiment.

The distributed power storage system 1 in the present embodiment includes a plurality of consumers 10, a cloud server 80, a control room 90, and a maintenance company 100.

Examples of the consumers 10 include a single-family detached house, a multi-unit residential complex, an office building, an electric-power company, and a power aggregator. In each consumer 10, power is supplied from a power storage system 30. Each consumer 10 includes a controller 20, a power storage system 30, a display device 40, an electric power meter 50, switching elements 60, and loads 70.

The controller 20 controls the power storage system 30, the display device 40, the electric power meter 50, and the switching elements 60.

The power storage system 30 supplies power to the loads 70 when the corresponding switching elements 60 are open. The power that the power storage system 30 supplies to the loads 70 is sequentially distributed in each consumer 10.

The display device 40 may be a terminal or the like in the possession of the consumer 10 and is, for example, a smartphone, a television, or a personal computer (PC). The display device 40 displays the state of processing in the controller 20. The display device 40 may also display the operating state of the switching element 60, the power storage system 30, or the like, information about the amounts of power consumed by the loads 70, or the like.

The electric power meter 50 measures the amount of power consumed by the consumer 10.

Each switching element 60 is controlled as to whether or not power is supplied from the power storage system 30 to the corresponding load 70. For example, each switching element 60 is controlled so as to supply power to the corresponding load 70 during power failure or tight power supply.

During a normal state, power is supplied from a power system 110 to the loads 70, and during power failure or tight power supply, power is supplied from the power storage system 30 to the loads 70. Some of the loads 70 may or may not be connected to the power storage system 30.

The cloud server 80 modifies information obtained from the consumers 10 so that the information can be displayed on terminals in the control room 90 and the maintenance company 100.

Based on the information obtained from the cloud server 80, the control room 90 checks whether or not the power storage system 30 is safe.

Based on information obtained from the cloud server 80, the maintenance company 100 checks whether or not the power storage system 30 requires maintenance.

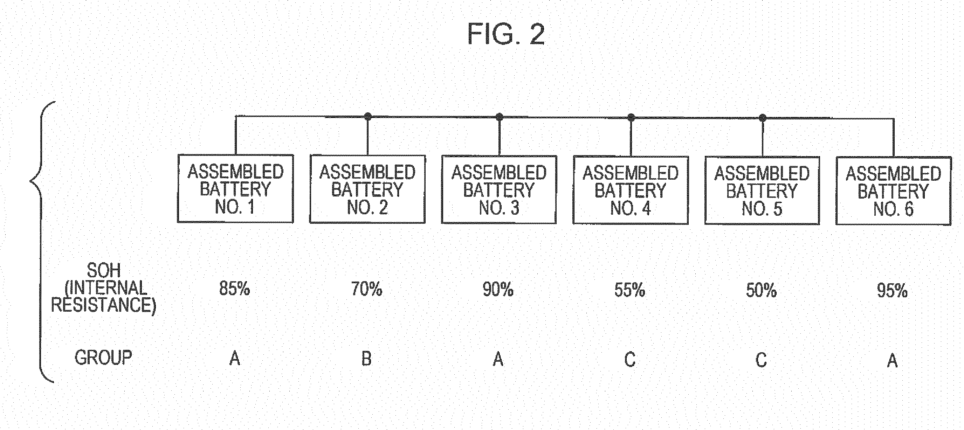

FIG. 2 illustrates assembled batteries included in the power storage system 30 in the first embodiment.

As illustrated in FIG. 2, the power storage system 30 includes a plurality of assembled batteries. In this case, the power storage system 30 includes assembled batteries No. 1 to No. 6. In FIG. 2, the assembled batteries are grouped according to degradation levels of the assembled batteries, for example, on the basis of the values of SOHs thereof. In FIG. 2, the assembled batteries are grouped into, for example, three groups A to C. Although the SOHs are used in the present embodiment, internal resistances calculated in association with the SOHs may also be used. The larger the internal resistance is, the smaller the SOH is and the higher the degradation of the assembled battery is, and the smaller the internal resistance is, the larger the SOH is and the lower the degradation of the assembled battery is.

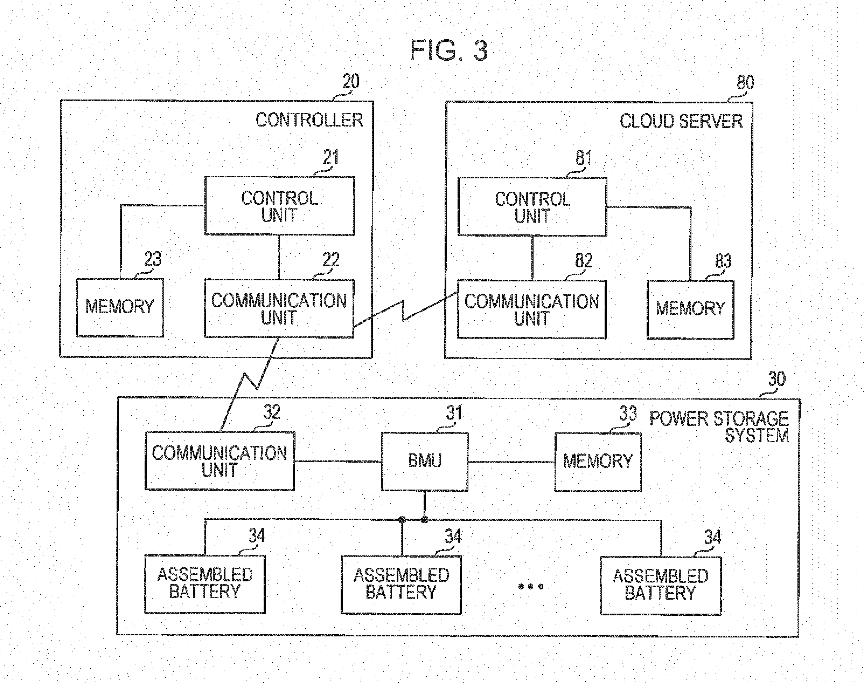

FIG. 3 is a diagram of a hardware configuration in the first embodiment.

The controller 20 includes a control unit 21, a communication unit 22, and a memory 23. The display device 40 illustrated in FIG. 1 is not limited to a terminal or the like in the possession of the consumer 10, and may be incorporated into the controller 20. The display device 40 may display the processing state of the controller 20.

The control unit 21 controls the power storage system 30, the electric power meter 50, and the switching elements 60 via the communication unit 22.

The communication unit 22 communicates with the power storage system 30, the cloud server 80, the electric power meter 50, and the switching elements 60.

The memory 23 stores therein information including data, programs, and so on.

The power storage system 30 includes a battery management unit (BMU) 31, a communication unit 32, a memory 33, and a plurality of assembled batteries 34. The display device 40 illustrated in FIG. 1 is not limited to a terminal or the like in the possession of the consumer 10 and may be incorporated into the power storage system 30.

The BMU 31 controls the assembled batteries 34.

The communication unit 32 communicates with the controller 20. The communication unit 32 may also communicate with a communication unit 82 in the cloud server 80.

The memory 33 stores therein information including data, programs, and so on.

Each of the assembled batteries 34 is an assembled battery in which a plurality of cells of the same type, such as secondary cells, are packed.

The cloud server 80 includes a control unit 81, the communication unit 82, and a memory 83.

The control unit 81 causes, for example, PCs, which are the terminals in the control room 90 and the maintenance company 100, to execute data generated by the control unit 81 and to display the resulting data on monitors of the PCs.

The communication unit 82 communicates with the controller 20, the control room 90, and the maintenance company 100. The communication unit 82 may communicate with the power storage system 30, and may also communicate with the electric power meter 50 to collect power data from the electric power meter 50.

The memory 83 stores therein information including data, programs, and so on.

The communication units 22, 32, and 82 may perform any of wired communication and wireless communication. More specifically, the Internet, a local area network (LAN), a recommended standard (RS) 422, a Universal Serial Bus (USB), or the like may be selectively used depending on the purpose for which the communication unit is used or a place where it is used.

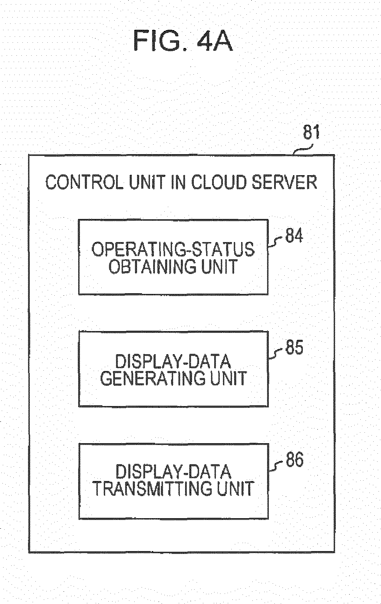

FIG. 4A is a functional block diagram of the control unit 81 in the cloud server 80 in the first embodiment.

The control unit 81 in the cloud server 80 includes an operating-status obtaining unit 84, a display-data generating unit 85, and a display-data transmitting unit 86.

The operating-status obtaining unit 84 obtains information regarding the operating state of the power storage system 30, such as states of charge (SOC) of the respective assembled batteries 34 or a fault in the power storage system 30. Examples of the fault in the power storage system 30 include a case in which a hardware/software fault occurs in a power conditioner, the BMU 31, the assembled batteries 34, the controller 20, or the power system 110 and a case in which years that requires inspection has passed.

The display-data generating unit 85 extracts various types of information obtained by the cloud server 80 and modifies the information so that it can be displayed on the monitors of the PCs in the control room 90 and the maintenance company 100.

The display-data transmitting unit 86 causes the modified data to be transmitted from the communication unit 82 to the control room 90 and the maintenance company 100.

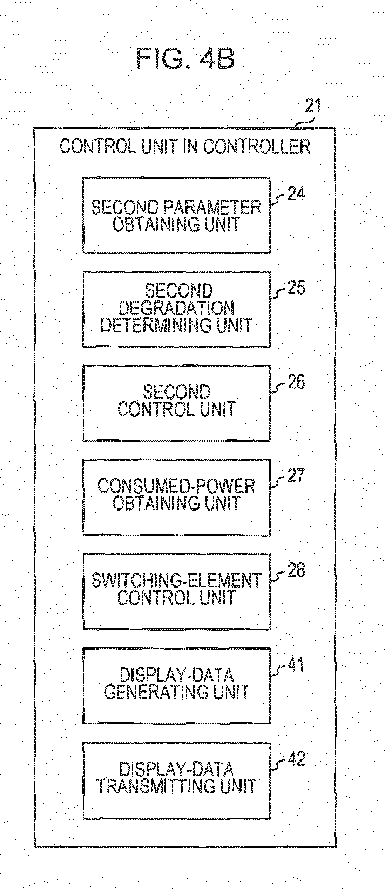

FIG. 4B is a functional block diagram of the control unit 21 in the controller 20 in the first embodiment.

The control unit 21 in the controller 20 includes a second parameter obtaining unit 24, a second degradation determining unit 25, a second control unit 26, a consumed-power obtaining unit 27, a switching-element control unit 28, a display-data generating unit 41, and a display-data transmitting unit 42.

The second parameter obtaining unit 24 obtains, from the assembled batteries 34, pieces of parameter information indicating the respective states of the assembled batteries 34. Examples of the "pieces of parameter information indicating the respective states of the assembled batteries 34" include electrical currents, voltages, temperatures, SOCs, and times elapsed from the last charging of the respective assembled batteries 34. The second parameter obtaining unit 24 may also obtain the SOHs as the pieces of parameter information.

By using the parameter information obtained by the second parameter obtaining unit 24, the second degradation determining unit 25 determines the respective degradation levels of the assembled batteries 34. That is, by using the respective electrical currents, voltages, temperatures of the assembled batteries 34 which are obtained by the second parameter obtaining unit 24, the second degradation determining unit 25 calculates the internal resistances and the SOHs. By using the electrical currents, the voltages, and the temperatures of the assembled batteries 34 which were obtained by the second parameter obtaining unit 24, the second degradation determining unit 25 determines one or more of the SOHs, the voltages, the temperatures, and the internal resistance as respective degradation levels of the assembled batteries 34. In the present embodiment, the degradation levels of the assembled batteries 34 are represented by the SOHs. Based on the determined degradation levels, the second degradation determining unit 25 groups the assembled batteries 34 into a plurality of groups corresponding to a plurality of degradation levels.

The second control unit 26 may be any device having a control function and has a computation processor (not illustrated) and a storage unit (not illustrated) for storing a control program. Examples of the computation processor include a micro processing unit (MPU) and a central processing unit (CPU). One example of the storage unit is a memory. The second control unit 26 may be implemented by an independent control unit that performs centralized control or may be constituted by a plurality of control units that perform distributed control in cooperation with each other.

The second control unit 26 executes at least one of first control and second control. In the first control, group designation is performed in descending order of priorities defined for the groups and corresponding to the degradation levels, and the assembled batteries belonging to the designated group are charged, and in the second control, group designation is performed in descending order of priorities defined for the groups and corresponding to the degradation levels, and the assembled batteries belonging to the designated group are discharged. In at least one of the first control and the second control, the second control unit 26 may select, as the assembled batteries 34 to be operated, the assembled batteries 34 that are included in the assembled batteries 34 belonging to each designated group and whose parameter information satisfies a predetermined condition. In the first control, the second control unit 26 also sets charging power values for the assembled batteries 34 to be operated. In the second control, the second control unit 26 sets discharging power values for the assembled batteries 34 to be operated. In the first control, the charging power values are set larger for the assembled batteries 34 belonging to the group whose priority is higher among the designated groups. In the second control, the discharging power values are set larger for the assembled batteries 34 belonging to the group whose priority is higher among the designated groups. The "charging power values" as used herein may be charging rates, and the "discharging power values" may be discharging rates.

The consumed-power obtaining unit 27 collects power data from the electric power meter 50.

The switching-element control unit 28 controls the opening/closing of each switching element 60.

The display-data generating unit 41 extracts various types of information obtained by the controller 20 and modifies the information so that it can be displayed on the display device 40.

The display-data transmitting unit 42 transmits the data modified by the display-data generating unit 41 from the communication unit 32 to the display device 40 and the cloud server 80.

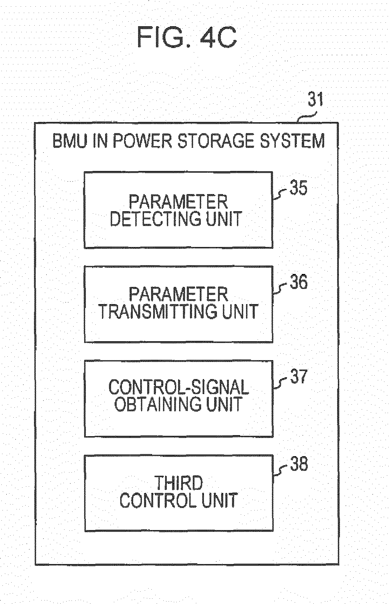

FIG. 4C is a functional block diagram of the BMU 31 in the power storage system 30 in the first embodiment.

The BMU 31 in the power storage system 30 includes a parameter detecting unit 35, a parameter transmitting unit 36, a control-signal obtaining unit 37, and a third control unit 38.

The parameter detecting unit 35 detects respective pieces of parameter information regarding the assembled batteries 34. The parameter detecting unit 35 may also calculate SOHs in accordance with the respective electrical currents, voltages, and temperatures of the assembled batteries 34.

The parameter transmitting unit 36 causes the detected parameter information of the assembled batteries 34 to be transmitted from the communication unit 32 to the controller 20.

The control-signal obtaining unit 37 obtains, from the controller 20, control signals for the assembled batteries 34.

Based on the control signals obtained by the control-signal obtaining unit 37, the third control unit 38 controls the assembled batteries 34.

Although, in the present embodiment, the second parameter obtaining unit 24, the second degradation determining unit 25, and the second control unit 26 are implemented by the control unit 21 in the controller 20, the present disclosure is not limited thereto. For example, the second parameter obtaining unit 24, the second degradation determining unit 25, and the second control unit 26 may be implemented by the control unit 81 in the cloud server 80. In such a case, the parameter transmitting unit 36 may cause the detected respective pieces of parameter information regarding the assembled batteries 34 to be transmitted from the communication unit 32 to the cloud server 80, and the control-signal obtaining unit 37 may obtain, from the cloud server 80, control signals for the assembled batteries 34.

Although, in the present embodiment, the controller 20 and the power storage system 30 are configured independently from each other, the present disclosure is not limited thereto. For example, the controller 20 may be integrally configured with the power storage system 30. The BMU 31 may also have the functions of the control unit 21 in the controller 20.

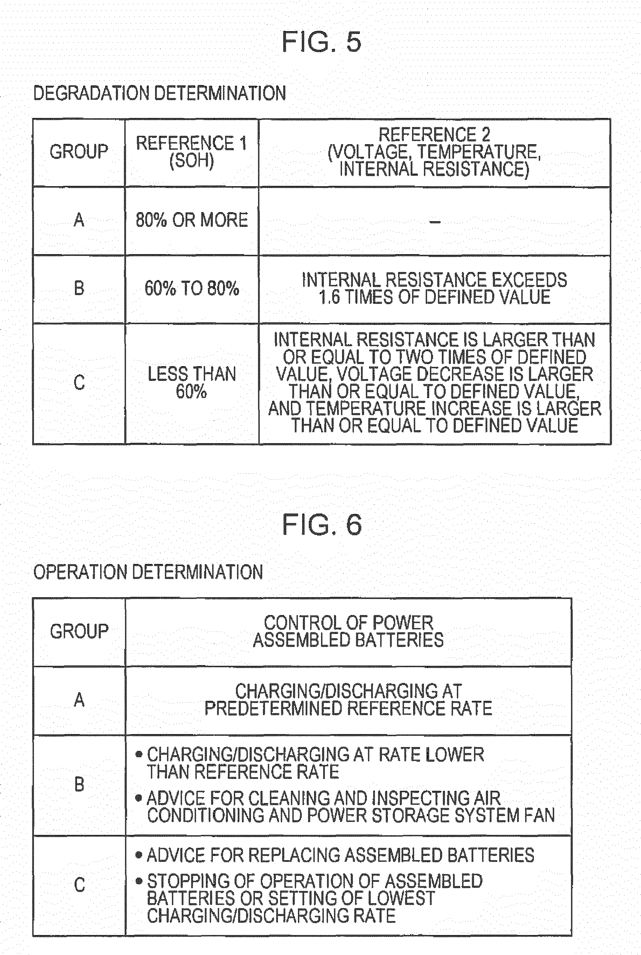

FIG. 5 illustrates a table of grouping according to degradation levels in the first embodiment.

In FIG. 5, the degradation levels of the assembled batteries 34 are grouped into, for example, three groups A to C. For example, a method using the SOHs as a reference for the grouping is available as illustrated at reference 1 in FIG. 5. In FIG. 5, the assembled batteries 34 in which the SOH is 80% or more are grouped into group A, the assembled batteries 34 in which the SOH is 60% to 80% are grouped into group B, and the assembled batteries 34 in which the SOH is less than 60% are grouped into group C. The smaller the value of the SOH is, the more degraded the assembled batteries 34 is. As illustrated at reference 2 in FIG. 5, for example, there is a method using internal resistances calculated from information regarding electrical currents, voltages, and temperatures collected from the assembled batteries 34. In FIG. 5, the assembled batteries 34 in which the internal resistance is within a defined value are grouped into group A, the assembled batteries 34 in which the internal resistance exceeds 1.6 times of the defined value are grouped into group B, and the assembled batteries 34 in which the internal resistance is larger than or equal to two times of the defined value, a voltage decrease is larger than or equal to a defined value, and a temperature increase is larger than or equal to a defined value are grouped into group C. The second degradation determining unit 25 at least one of whether or not each assembled battery 34 is charged and whether or not each assembled battery 34 is discharged. When the assembled battery 34 is charged and/or discharged, the second degradation determining unit 25 may correct a threshold between groups on the basis of at least an electrical current value or an ambient temperature value. For example, since the SOH decreases as the temperature increases, the threshold for the SOH in reference 1 in FIG. 5 may be corrected according to the temperature. Also, since the internal resistance decreases as the temperature increases, the threshold for the internal resistance of reference 2 in FIG. 5 may be corrected according to the temperature. In addition, since the temperature increases as the electrical current value increases, the threshold for the temperature of reference 2 in FIG. 5 may be corrected according to the electrical current value.

As described above, the assembled batteries 34 are grouped into groups corresponding to the degradation levels, based on a table as illustrated in FIG. 5. In the present embodiment, the table is stored, but is not limited to, in the memory 23 in the controller 20. For example, the table may be stored in the memory 83 in the cloud server 80.

FIG. 6 is a table illustrating control of the assembled batteries 34 which is set according to the groups in the first embodiment.

For the assembled batteries 34 belonging to group A, a charging power value is set at a predetermined reference charging rate. Also, a discharging power value is set at a predetermined reference discharging rate. For the assembled batteries 34 belonging to group B, a charging power value is set to a rate lower than a reference rate, for example, to 0.5 times of a reference rate. In addition, for the assembled batteries 34 belonging to group B, a discharging power value is set to a rate lower than a reference rate, for example, to 0.5 times of a reference rate. Advice for cleaning and inspecting air conditioning and a power storage system fan may be given to the user of the power storage system 30. The operations of the assembled batteries 34 belonging to group C are stopped. Alternatively, a charging power value at which charging is performed at the lowest charging rate is set. Alternatively, a discharging power value at which discharging is performed at the lowest discharging rate is set. When the charging power values of the assembled batteries 34 are set to 0, the operation of the assembled batteries 34 may be stopped. The discharging power value may also be set to 0 to stop the operations of the assembled batteries 34. Advice for replacing the assembled batteries 34 or advice for updating BMU firmware may be given to the user.

Control of the assembled batteries 34 is set according to the group and may involve not only control for the charging power values but also control considering the number of charging or charging times. The control of the assembled batteries 34 which is set according to the group may also involve not only control for the discharging power values but also control considering the number of discharging or discharging times.

Next, a description will be given of the operation of the distributed power storage system 1 in the present embodiment which is configured as in FIGS. 1 to 4.

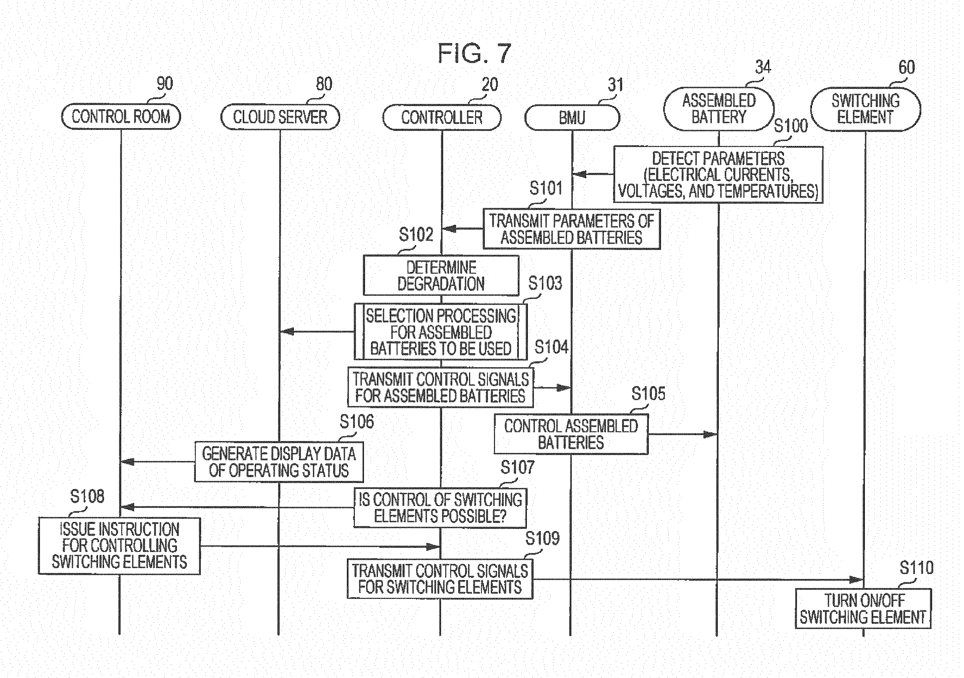

FIG. 7 is a sequence diagram illustrating a flow of overall processing in the first embodiment.

First, the parameter detecting unit 35 in the BMU 31 detects, from the assembled batteries 34, pieces of parameter information indicating the respective states of the assembled batteries 34 (S100). More specifically, the parameter detecting unit 35 obtains information regarding electrical currents, voltages, temperatures, SOCs, and times elapsed from the last charging of the respective assembled batteries 34. When the frequency of obtaining the parameter information from the assembled batteries 34 is increased for the assembled batteries 34 belonging to a group having a higher degradation level among a plurality of groups resulting from grouping described below, it is possible to perform degradation determination processing with high efficiency. Also, since the frequency of obtaining the parameter information of the assembled batteries 34 belonging to a group having lower safety and having a higher degradation level increases, the safety of the power storage system 30 is enhanced.

The parameter transmitting unit 36 in the BMU 31 transmits the respective pieces of parameter information regarding the assembled batteries 34 to the controller 20 (S101).

The second parameter obtaining unit 24 in the controller 20 obtains the pieces of parameter information detected from the assembled batteries 34 and indicating the respective states of the assembled batteries 34. By using the parameter information obtained by the second parameter obtaining unit 24, the second degradation determining unit 25 in the controller 20 determines the respective degradation levels of the assembled batteries 34, and based on the determined degradation levels, the second degradation determining unit 25 groups the assembled batteries 34 into a plurality of groups corresponding to the degradation levels (S102).

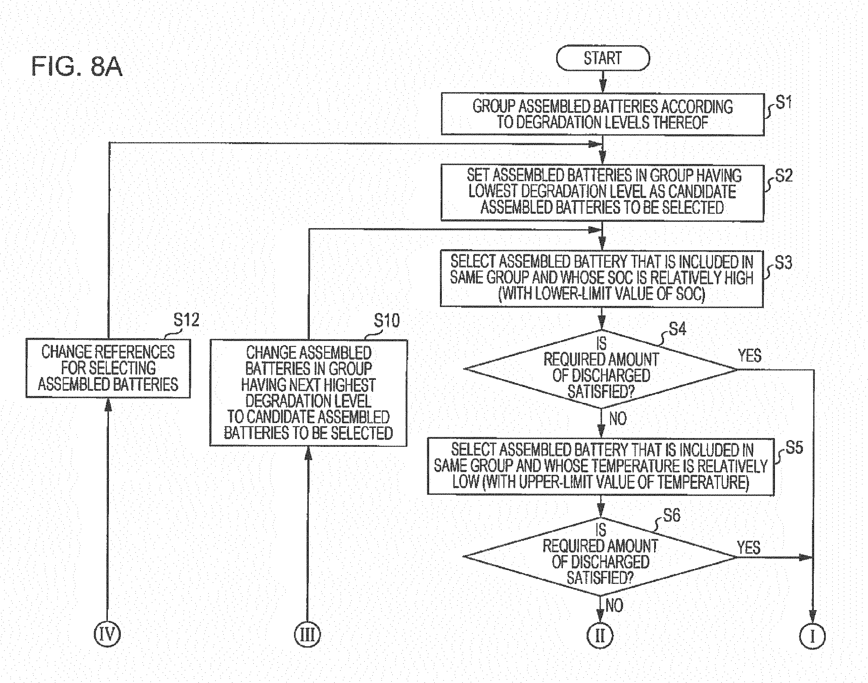

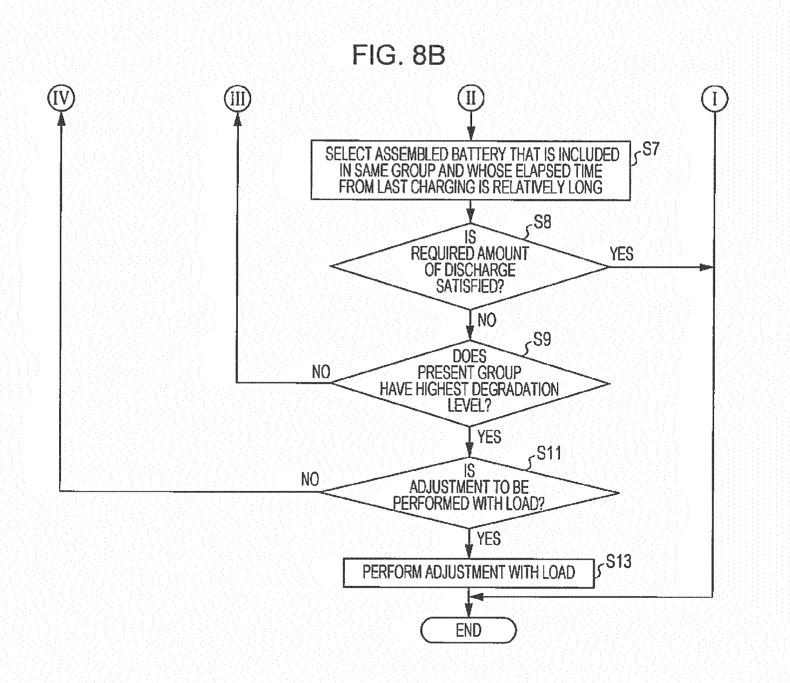

Next, in step S103, the following processing is performed. The second control unit 26 in the controller 20 executes at least one of first control and second control. In the first control, group designation is performed in descending order of priorities defined for the groups and corresponding to the degradation levels, and the assembled batteries belonging to the designated group are charged, and in the second control, group designation is performed in descending order of priorities defined for the groups and corresponding to the degradation levels, and the assembled batteries belonging to the designated group are discharged. In at least one of the first control and the second control, the second control unit 26 may select, as the assembled batteries 34 to be operated, the assembled batteries 34 that are included in the assembled batteries 34 belonging to each designated group and whose parameter information satisfies a predetermined condition. The second control unit 26 also sets charging power values for the assembled batteries 34 selected as the assembled batteries 34 to be operated. During the setting of the charging power values, the charging power values are set larger for the assembled batteries 34 belonging to the group whose priority is higher among the groups to which the assembled batteries 34 selected as the assembled batteries 34 to be operated belong. The second control unit 26 also sets discharging power values for the assembled batteries 34 selected as the assembled batteries 34 to be operated. During the setting of the discharging power values, the discharging power values are set larger for the assembled batteries 34 belonging to the group whose priority is higher among the groups to which the assembled batteries 34 selected as the assembled batteries 34 to be operated belong. Lastly, the display-data transmitting unit 42 in the controller 20 transmits, to the cloud server 80, information regarding the operating status of the power storage system 30. A method for selecting the assembled batteries 34 will be described below with reference to the flowchart illustrated in FIGS. 8A and 8B.

Also, in order to control the assembled batteries 34 selected as the assembled batteries 34 to be operated, the second control unit 26 transmits, to the

BMU 31, control signals for the assembled batteries 34 (S104).

Based on the set charging power values, the control-signal obtaining unit 37 in the BMU 31 controls the amounts of charge in the assembled batteries 34 to be operated (S105). Also, based on the set discharging power values, the control-signal obtaining unit 37 in the BMU 31 also controls the amounts of discharge in the assembled batteries 34 to be operated (S105).

In step S106, the following processing is performed. The operating-status obtaining unit 84 in the cloud server 80 obtains information regarding the operating status of the power storage system 30. Next, the display-data generating unit 85 in the cloud server 80 modifies the information obtained by the operating-status obtaining unit 84 so that the information can be displayed on a monitor of a PC in the control room 90. Lastly, the display-data transmitting unit 86 in the cloud server 80 transmits the modified data to the control room 90.

The switching-element control unit 28 in the controller 20 pre-measures, for example, rated electrical current values needed for the respective loads 70, and when power supplied from the power storage system 30 to the loads 70 is not sufficient, the switching-element control unit 28 controls the switching elements 60 to thereby regulate the amounts of power supplied from the power storage system 30. More specifically, in order to allow appropriate control of the switching elements 60, rated electrical current values and inrush electrical current values of the respective loads 70 are collected in advance by obtaining the values from catalogs or the like or by measuring the values with a measuring instrument or the like. Then, the switching elements 60 are controlled so that power is supplied to the loads 70 in ascending or descending order of the rated electrical current values or the inrush electrical current values of the loads 70.

In order to ensure safety, the switching-element control unit 28 notifies the control room 90 of whether or not the control of the switching elements 60 which is to be executed by the switching-element control unit 28 is possible (S107).

Based on the information regarding the operating status of the power storage system 30 and the control of the switching elements 60 which is to be executed by the switching-element control unit 28, the control room 90 issues an instruction for controlling the switching elements 60 to the controller 20 so that safety is ensured (S108).

In accordance with the instruction from the control room 90, the switching-element control unit 28 transmits control signals for the switching elements 60 to the switching elements 60 (S109).

In accordance with the control signal for each switching element 60, the switching element 60 turns on/off the switching element 60 (S110).

Although, in the present embodiment, the controller 20 performs the degradation determination and the selection processing for the assembled batteries 34, the present disclosure is not limited thereto. For example, at least one of the degradation determination and the selection processing for the assembled batteries 34 may be realized by the cloud server 80 or the BMU 31.

Next, a method for selecting, in the present embodiment, the assembled batteries 34 to be operated and the assembled batteries 34 not to be operated will be described with reference to FIGS. 8A to 10. Specifically, in order that predetermined discharging power is obtained in the power storage system 30, the groups are designated sequentially with the group having the highest priority first, based on predetermined priorities for the respective groups, and the assembled batteries belonging to each designated group are operated. Of the assembled batteries 34 belonging to each designated group, the assembled battery 34 whose parameter information satisfies a predetermined condition is selected as the assembled battery 34 to be operated.

FIGS. 8A and 8B illustrate a flowchart of a method for selecting, in the first embodiment, the assembled batteries 34 to be operated and the assembled batteries 34 not to be operated. In the present embodiment, the assembled batteries 34 whose SOCs, temperatures, and elapsed times from the last charging of the respective pieces of parameter information of the assembled batteries 34 satisfy a predetermined condition are selected. However, the assembled batteries 34 whose at least one of the temperatures, SOCs, last charging times, and last discharging times satisfies a predetermined condition may also be selected as the assembled batteries 34 to be operated. When the assembled batteries 34 whose elapsed times from the last discharging are long are selected with high priority, suppression of calendar life degradation is facilitated, and thus long life of the assembled batteries 34 can be expected. Conversely, when the assembled batteries 34 whose elapsed times from the last discharging are short are selected with high priority, calendar life degradation increases, and thus the life of the assembled batteries 34 is shortened. Although, in the present embodiment, whether or not the assembled batteries 34 satisfy the predetermined condition are determined in order of the SOC, the temperature, and the elapsed time from the last charging, the present disclosure is not limited thereto. For example, whether or not the assembled batteries 34 satisfy the predetermined condition may be determined in order of the temperature, the SOC, and the elapsed time from the last charging.

Also, information of the temperatures is used as an index for selecting the assembled batteries 34. However, for example, when the assembled batteries 34 are arranged in a plurality of apartment buildings in a distributed manner, the temperatures of the assembled batteries 34 differ depending on whether or not air conditioners are provided in the respective apartment buildings, how the air conditioners are controlled, or the like. Consequently, a temperature difference is likely to occur. In this case, the information regarding the temperatures may be the temperatures of only the batteries or temperatures including the temperatures of peripheral equipment, such as a power conditioner.

In the present embodiment, the assembled batteries 34 are selected so that the assembled batteries 34 degrade equally and the power storage system 30 can perform long life operation. When the number of selection candidates of the assembled batteries 34 is large, the assembled battery 34 with which the power conditioner efficiency increases may be selected with high priority in response to an instruction value.

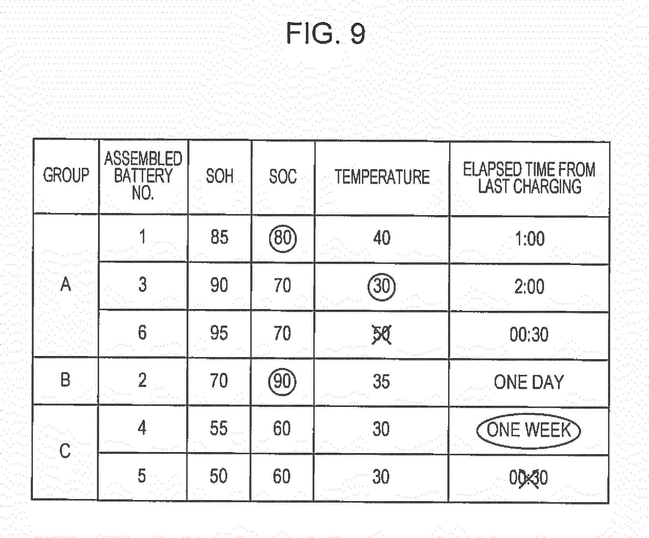

FIG. 9 is a table illustrating selection of the assembled batteries 34 in the first embodiment. FIG. 9 illustrates the SOHs, SOCs, temperatures, and elapsed times from the last charging of the respective assembled batteries 34.

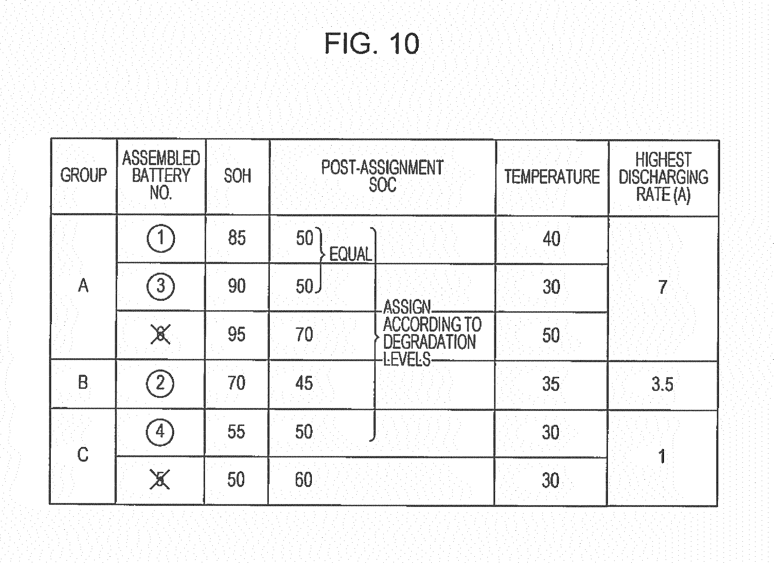

FIG. 10 is a table illustrating assignment of the amounts of discharge in the assembled batteries 34 selected in the first embodiment. FIG. 10 illustrates the SOHs, post-assignment SOCs, temperatures, the highest discharging rates of the respective assembled batteries 34.

As illustrated in FIG. 9, the SOH varies depending on the individual assembled battery 34, owing to a difference in the amount of discharge which occurs in the assembled battery 34 in accordance with a requested amount of discharge, replacement of the assembled battery 34 as a result of occurrence of a fault or failure thereof, or the like. A difference in the degradation speed of a battery cell which occurs owing to a difference in battery cell characteristics of variants and manufacturers also causes variation of the SOH.

First, the assembled batteries 34 are grouped according to the degradation levels of the assembled batteries 34 (S1). In the present embodiment, six assembled batteries No. 1 to No. 6 are grouped into groups A to C according to the degradation levels (SOHs), as illustrated in FIG. 9. Assembled batteries No. 1, No. 3, and No. 6 are grouped into group A, assembled battery No. 2 is grouped into group B, and assembled batteries No. 4 and No. 5 are grouped into group C.

Next, the assembled batteries 34 in the group having the lowest degradation level are set as candidate assembled batteries to be selected (S2). In the present embodiment, since group A is a group having the lowest degradation level, assembled batteries No. 1, No. 3, and No. 6 that are included in group A and that have not degraded are first set as candidate assembled batteries to be selected.

Next, the assembled battery 34 that is included in the same group and whose SOC is relatively high is selected as the assembled battery 34 to be operated (S3). If the assembled battery 34 whose SOC is low is selected as the assembled battery 34 to be operated, it is difficult to satisfy the amount of discharge required by the loads 70, and thus the SOC is a condition for selecting the assembled battery 34. As illustrated in FIG. 9, the SOC of assembled battery No. 1 is 80%, and the SOCs of assembled batteries No. 3 and No. 6 are 70%, and thus assembled battery No. 1 whose SOC is relatively high is selected as the assembled battery 34 to be operated. A lower-limit value may be set for the SOCs. For example, each assembled battery 34 whose SOC is smaller than or equal to a predetermined value may be selected as the assembled battery 34 not to be operated, without being subjected to determinations in steps S5 and S7 described below.

Next, a determination is made as to whether or not the amount of discharge required by the loads 70 is satisfied with the assembled battery 34 selected as the assembled battery 34 to be operated (S4). If the amount of discharge required by the loads 70 is satisfied with the assembled battery 34 selected as the assembled battery 34 to be operated (YES in S4), only assembled battery No. 1 in group A is operated.

In the present embodiment, since the amount of discharge required by the loads 70 is not satisfied with assembled battery No. 1 included in group A and selected as the assembled battery 34 to be operated (NO in S4), the assembled battery 34 that is included in the same group and whose temperature is relatively low is further selected as the assembled battery 34 to be operated (S5). Since the assembled batteries 34 are used at high temperatures, degradation of each assembled battery 34 is promoted, and thus the temperature is a condition for selecting the assembled battery 34. The temperature of assembled battery No. 3 is 30°C, and the temperature of assembled battery No. 6 is 50°C, as illustrated in FIG. 9. Thus, assembled battery No. 3 having the relatively low temperature is selected as the assembled battery 34 to be operated. An upper-limit value may be set for the temperatures. For example, the assembled battery 34 whose temperature is 50°C or more may be selected as the assembled battery 34 not to be operated, without being selected in step S7 described below. In the present embodiment, since the temperature of assembled battery No. 6 is 50°C, it is selected in step S5 as the assembled battery 34 not to be operated.

Next, a determination is made as to whether or not the amount of discharge required by the loads 70 is satisfied with the assembled batteries 34 selected as the assembled batteries 34 to be operated (S6). If the amount of discharge required by the loads 70 is satisfied with the assembled batteries 34 selected as the assembled batteries 34 to be operated (YES in S6), only assembled batteries No. 1 and No. 3 in group A are operated.

In the present embodiment, since the amount of discharge required by the loads 70 is not satisfied with assembled batteries No. 1 and No. 3 included in group A and selected as the assembled batteries 34 to be operated (NO in S6), the assembled battery 34 that is included in the same group and whose elapsed time from the last charging is relatively long is further selected as the assembled battery 34 to be operated (S7). Since degradation of each assembled battery 34 is promoted as the elapsed time from the last charging of the assembled battery 34 increases, the elapsed time from the last charging is a condition for selecting the assembled battery 34. In the present embodiment, since the assembled batteries 34 to be operated and the assembled battery 34 not to be operated have all been selected from the assembled batteries 34 belonging to group A, no assembled battery 34 is selected in step S7.

Next, a determination is made as to whether or not the amount of discharge required by the loads 70 is satisfied with the assembled batteries 34 selected as the assembled batteries 34 to be operated (S8). When the amount of discharge required by the loads 70 is satisfied with the assembled batteries 34 selected as the assembled batteries 34 to be operated (YES in S8), only assembled batteries No. 1 and No. 3 in group A are operated.

As described above, the amounts of discharge in the assembled batteries 34 to be selected as the assembled batteries 34 to be operated are sequentially added up, and whether or not the amount of discharge required by the loads 70 is satisfied is determined in steps S4, S6, and S8. That is, in the second control, the assembled batteries 34 belonging to a first group (group A) whose priority is the highest are operated, and a determination is made as to whether or not power that can be supplied from the power storage system 30 satisfies power required by the loads 70.

In the present embodiment, since the amount of discharge required by the loads 70 is not satisfied with assembled batteries No. 1 and No. 3 included in group A and selected as the assembled batteries 34 to be operated (NO in S8), a determination is made as to whether or not the group to which the assembled batteries 34 presently set as candidate batteries belong is the group having the highest degradation level (S9). Since the group to which the assembled batteries 34 presently set as candidate batteries to be selected belong is group A having the lowest degradation level, not group C having the highest degradation level (NO in S9), the assembled batteries 34 in the group having the next highest degradation level are set as candidate assembled batteries to be selected (S10).

In the present embodiment, assembled battery No. 2 in group B is set a candidate assembled battery to be selected. As described above, the group belonging to the groups is designated in descending order of the priorities until predetermined discharging power is obtained in the power storage system 30. Accordingly, when the amount of discharge is not satisfied with the assembled batteries 34 selected in steps S3, S5, and S7 thus far, the assembled batteries 34 set as candidate batteries to be selected are changed to the assembled batteries 34 in the group having a higher degradation level. That is, when power that can be supplied from the power storage system 30 does not satisfy the power required by the loads 70, the assembled batteries 34 belonging to a second group (group B) whose priority is lower than the priority of the first group (group A) are selected as the assembled batteries 34 to be operated, and the selected assembled batteries 34 belonging to the first group (group A) and the second group (group B) are used to discharge power.

Next, with respect to the assembled batteries 34 in group B, the assembled battery 34 to be operated and the assembled battery 34 not to be operated are selected in steps S3, S5, and S7 in the same manner as for the assembled batteries 34 in group A. In the present embodiment, the SOC of assembled battery No. 2 in group B is 90%, and thus, in step S3, assembled battery No. 2 is selected as the assembled battery 34 to be operated.

In the present embodiment, only assembled battery No. 3 is the assembled battery 34 belonging to group B, and assembled battery No. 3 was selected in step S3 as the assembled battery 34 to be operated, and thus, no assembled battery 34 is selected in steps S5 and S7. Also, in the present embodiment, since the amount of discharge required by the loads 70 is not satisfied with the assembled batteries 34 included in groups A and B and selected as the assembled batteries 34 to be operated, the process proceeds to step S9 again, and a determination is made as to whether or not the group to which the assembled batteries 34 presently set as candidate assembled batteries to be selected belong is the group having the highest degradation level. Since the group to which the assembled batteries 34 presently set as candidate assembled batteries to be selected is group B, not the group C having the highest degradation level (NO in S9), the assembled batteries 34 in the group having the next highest degradation level are set as candidate assembled batteries to be selected (S10). In the present embodiment, assembled batteries No. 4 and No. 5 in group C are set as candidate assembled batteries to be selected.

Next, with respect to the assembled batteries 34 in group C, the assembled batteries 34 to be operated and the assembled batteries 34 not to be operated are selected in steps S3, S5, and S7 in the same manner as for the assembled batteries 34 in groups A and B.

The SOCs of assembled batteries No. 4 and No. 5 in group C have the same value, 60%, and thus, in step S3, no assembled battery 34 having a relatively high SOC is selected. In addition, the temperatures of assembled batteries No. 4 and No. 5 in group C have the same value, 30°C, and thus, in step S5, no assembled battery 34 having a relatively low temperature is selected. However, as illustrated in FIG. 9, the elapsed time from the last charging of assembled battery No. 4 in group C is one week, and the elapsed time from the last charging of assembled battery No. 5 is 30 minutes. Thus, in step S7, assembled battery No. 4 that is included in the same group and whose elapsed time from the last charging is relatively long is selected as the assembled battery 34 to be operated. Then, assembled batteries No. 1 to No. 4 included in groups A to C and selected as the assembled batteries 34 to be operated are operated.

Since the assembled batteries 34 to be operated and the assembled batteries 34 not to be operated are selected from the groups having low degradation levels, the assembled batteries 34 included in the power storage system 30 degrade equally, and thus the power storage system 30 performs long life operation. For example, when the amount of discharge required by the loads 70 can be satisfied with only the assembled batteries 34 in group A, it is easier to set the discharging power values for the assembled batteries 34 and to determine the number of assembled batteries 34 to be operated. For instance, in the example of the present embodiment, the number of assembled batteries 34 to be operated may be determined from the three assembled batteries 34 in group A, and the discharging power values may also be set in accordance with the degradation level of group A. For example, when the highest discharging rate of the assembled batteries 34 in group A is pre-determined to be 7A, as illustrated in FIG. 10, discharging power values may be set for assembled batteries No. 1 and No. 3 included in group A and selected as the assembled batteries 34 to be operated, according to the highest discharging rate 7A.

If the amount of discharge required by the loads 70 is not satisfied even when the selection processing is performed on the assembled batteries 34 in all of the groups (YES in S9), the user is queried about whether or not the loads 70 to which power is supplied are to be controlled by the switching elements 60 (S11). If the user decides that power is not to be supplied to any of the loads 70 (YES in S11), the load 70 for which he or she decided that power is not to be supplied is controlled with the switching element 60, so that no power is supplied to the load 70 (S13). Even when the amount of discharge required by the loads 70 is not satisfied, if the user decides that power is to be supplied to the loads 70 (NO in S11), the references for selecting the assembled batteries 34 are changed (S12). For example, the selection references, such as the lower-limit value of the SOC in step S3, the upper-limit value of the temperature in step S5, and so on are changed, so that a larger number of the assembled batteries 34 are selected as the assembled batteries 34 to be operated.

Although, in the present embodiment, the assembled batteries 34 degrade equally, and the assembled batteries 34 are selected so that the power storage system 30 can perform long life operation, the present disclosure is not limited thereto. For example, the assembled batteries 34 may be selected so as to allow short life operation with which the replacement timing of the assembled batteries 34 can be controlled and the assembled batteries 34 can be easily replaced. During the selection, a group having a high degradation level may be selected with high priority. Of the assembled batteries in the group, the assembled battery whose parameter information (e.g., the temperature) indicates that it is likely to degrade when operated may be selected with high priority. Although, in the present embodiment, the controller 20 selects the assembled batteries 34 to be operated and the assembled batteries 34 not to be operated, the present disclosure is not limited thereto. For example, the cloud server 80 or the power storage system 30 may perform the selection.

For assembled batteries No. 1 to No. 4 included in groups A to C and selected as the assembled batteries 34 to be operated, the discharging power values are set in the ranges of highest discharging rates assigned to the respective groups, as illustrated in FIG. 10. During the setting of the discharging power values, the discharging power values of the respective assembled batteries 34 belonging to the same group are set so that the SOCs of the assembled batteries 34 become equal to each other. More specifically, the discharging power values are assigned to assembled batteries No. 1 and No. 3, selected from group A, so that the SOCs thereof become equal to each other. Also, the discharging power value is set larger for the assembled battery 34 having a lower degradation level. Since a higher discharging rate is assigned to the assembled battery 34 having a lower degradation level, the amount of change in the SOC thereof increases.

Although, in the present embodiment, the discharging power values of the assembled batteries 34 are set so that the assembled batteries 34 degrade equally, and the power storage system 30 can perform long life operation, the present disclosure is not limited thereto. The discharging power values may also be set so as to allow short life operation with which the replacement timing of the assembled batteries 34 can be controlled and the assembled batteries 34 can be easily replaced.

In addition, although one example of control for discharging in the power storage system 30, involving the second control, has been described in the example described above with reference to FIGS. 8A to 10, control for charging in the power storage system 30 may also be performed instead of the control for discharging in the above-described example.

Also, although, in the example described above with reference to FIGS. 8A to 10, the assembled batteries to be operated and the assembled batteries not to be operated are selected from the assembled batteries in the designated group on the basis of the parameter information, all of the assembled batteries in the designated group may be operated without performing such selection.

During supply of power from the power storage system 30 to one load 70, when power supplied from the power storage system 30 is smaller than power required by the load 70, the power supply to the load 70 is stopped.

Also, during supply of power from the power storage system 30 to the plurality of loads 70, when the power supplied from the power storage system 30 is lower than the power required by the plurality of loads 70, the power supply to the load 70 included in the plurality of loads 70 is stopped in ascending order of priorities defined for the plurality of loads 70.

The display device 40 also receives an instruction indicating whether at least one of the charging power values and the discharging power values of the assembled batteries 34 belonging to the group having a higher degradation level among the plurality of groups is to be set small or large. In accordance with the instruction, at least one of the discharging power values and the charging power values is set. The display device 40 may also display at least one of the charging power values and the discharging power values set according to the received instruction and the number of assembled batteries 34 to be operated among the plurality of assembled batteries 34. Thus, the user can know at least one of the set charging power values and the discharging power values and the number of assembled batteries to be operated among the plurality of assembled batteries.

Thus, in the power-storage-system control method and the power-storage-system control apparatus in the present embodiment, since the assembled batteries 34 that satisfy the predetermined condition are selected for each group having the predetermined priority, the assembled batteries 34 can be controlled considering the life of the assembled batteries 34.

### (Second Embodiment)

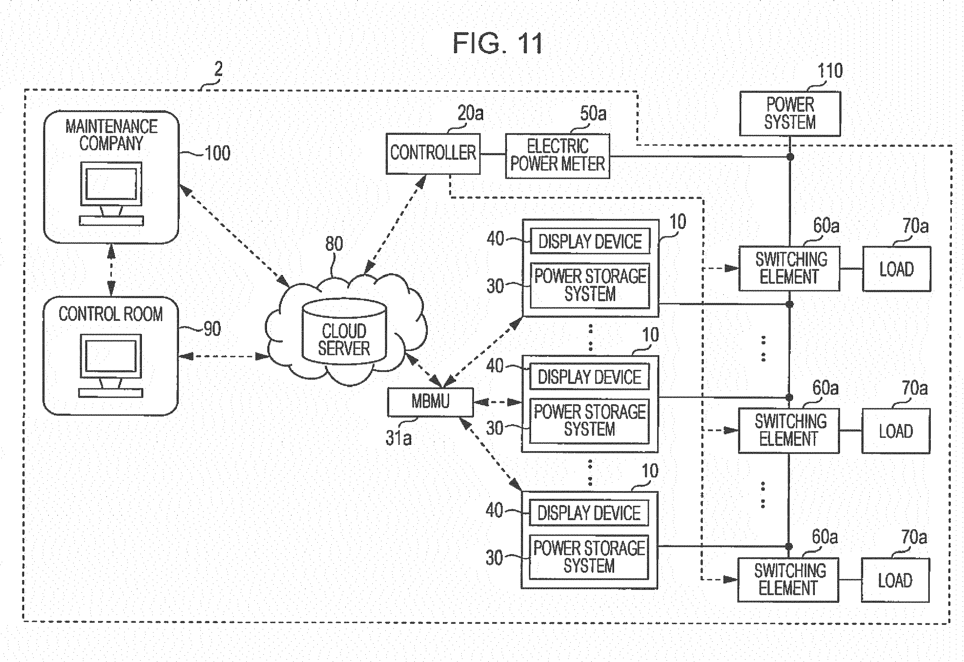

A second embodiment will be described below with reference to FIGS. 11 to 14.

FIG. 11 is a block diagram of a distributed power storage system 2 in the second embodiment. At least one of charging control and discharging control can be performed on the entire distributed power storage system 2.

In FIG. 11, the distributed power storage system 2 in the present embodiment differs from the distributed power storage system 1 in the first embodiment in that a controller 20a, an electric power meter 50a, a master battery management unit (MBMU) 31 a, switching elements 60a, and loads 70a are provided. Since other constituent elements are the same as or similar to those in the distributed power storage system 1 in the first embodiment, they are denoted by the same reference numerals, and descriptions thereof are not given hereafter.

The MBMU 31a controls the power storage systems 30 in a coordinated manner. That is, as in the case in which the BMU 31 controls the assembled batteries 34 in the first embodiment, the MBMU 31a controls the power storage systems 30 in the present embodiment.

The controller 20a controls the electric power meter 50a and the switching elements 60a.

The electric power meter 50a performs measurement to determine whether or not the amount of power supplied from the power storage systems 30 is insuffcient. When the amount of power supplied from the power storage systems 30 is insufficient, the controller 20a controls the switching elements 60a to limit the loads 70a to which the power is supplied.

The switching elements 60a are controlled as to whether or not power is to be supplied from the plurality of power storage systems 30 to the loads 70a during power failure or tight power supply.

During a normal state, power is supplied from the power system 110 to the loads 70a, and, during power failure or tight power supply, power is supplied from the power storage systems 30 to the loads 70a.

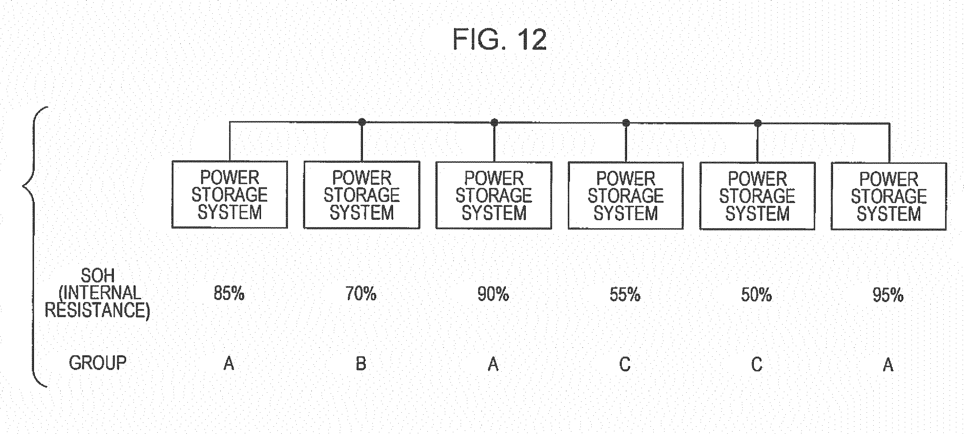

FIG. 12 illustrates the power storage systems 30 controlled by the MBMU 31 a in the second embodiment.

In FIG. 12, for example, using the values of the SOHs of the power storage systems 30, the power storage systems 30 are grouped according to the degradation levels the. In FIG. 12, the power storage systems 30 are grouped into, for example, three groups A to C. Although the SOHs are used in the present embodiment, internal resistances calculated in association with the SOHs may also be used. The larger the internal resistance is, the smaller the SOH is and the larger the degradation of the power storage system 30 is, and the smaller the internal resistance is, the larger the SOH is and the lower the degradation of the power storage system 30 is. The degradation level of each power storage system 30 may be the average of the degradation levels of assembled batteries 34 included in the power storage system 30. Alternatively, the degradation level of each power storage system 30 may be the degradation level of the assembled battery 34 having the highest degradation level among the assembled batteries 34 included in the power storage system 30.

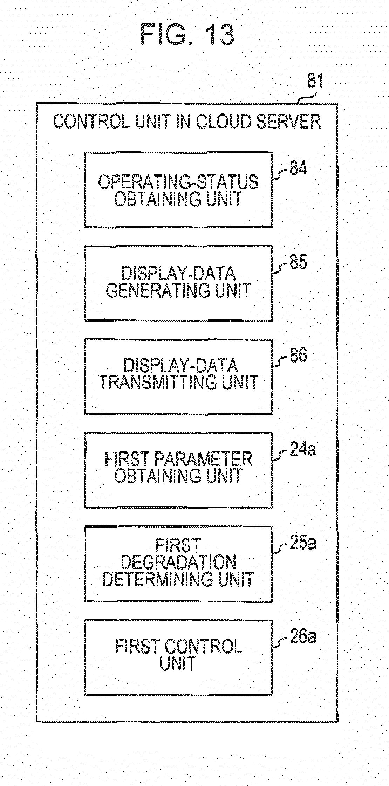

FIG. 13 is a functional block diagram of a control unit in a cloud server in the second embodiment.

In the present embodiment, the control unit 81 in the cloud server 80 includes a first parameter obtaining unit 24a, a first degradation determining unit 25a, and a first control unit 26a.

The first parameter obtaining unit 24a obtains, from the power storage systems 30, pieces of parameter information indicating respective states of the power storage systems 30. The pieces of parameter information indicating the respective states of the power storage systems 30 include, for example, electrical currents, voltages, temperatures, SOCs, and elapsed times from last charging of the respective power storage systems 30. The first parameter obtaining unit 24a may obtain the SOHs as the pieces of parameter information.

By using the pieces of parameter information obtained by the first parameter obtaining unit 24a, the first degradation determining unit 25a determines respective degradation levels of the power storage systems 30. That is, the first degradation determining unit 25a calculates internal resistances and SOHs, based on the respective electrical currents, voltages, and temperatures of the power storage systems 30 which were obtained by the first parameter obtaining unit 24a. By using the electrical currents, voltages, and temperatures of the power storage systems 30 which were obtained by the first parameter obtaining unit 24a, the first degradation determining unit 25a determines one or more of the SOHs, voltages, temperatures, and internal resistances as the respective degradation levels of the power storage systems 30. In the present embodiment, the degradation levels of the power storage systems 30 are represented by the SOHs. Based on the determined degradation levels, the first degradation determining unit 25a groups the power storage systems 30 into a plurality of groups corresponding to the degradation levels.

The first control unit 26a may be any device having a control function and has a computation processor (not illustrated) and a storage unit (not illustrated) for storing a control program. Examples of the computation processor include an MPU and a CPU. One example of the storage unit is a memory. The first control unit 26a may be implemented by an independent control unit that performs centralized control or may be constituted by a plurality of control units that perform distributed control in cooperation with each other.

The first control unit 26a executes at least one of first control and second control. In the first control, the groups of the power storage systems 30 are designated in descending order of priorities defined for the groups and corresponding to the degradation levels, and the power storage systems 30 belonging to each designated group are charged, and in the second control, the groups of the power storage systems 30 are designated in descending order of priorities defined for the groups and corresponding to the degradation levels, and the power storage systems 30 belonging to the designated group are discharged. Then, in at least one of the first control and the second control, the first control unit 26a may select, as the power storage systems 30 to be operated, the power storage systems 30 that are included in the power storage systems 30 belonging to each designated group and whose parameter information satisfies a predetermined condition. In the first control, the first control unit 26a further sets charging power values for the power storage systems 30 to be operated. In the second control, the first control unit 26a sets discharging power values for the power storage systems 30 to be operated. In the first control, the charging power values are set larger for the power storage systems 30 belonging to the group whose priority is higher among the designated groups. In the second control, the discharging power values are set larger for the power storage systems 30 belonging to the group whose priority is higher among the designated groups.

Although, in the present embodiment, the first parameter obtaining unit 24a, the first degradation determining unit 25a, and the first control unit 26a are included in the cloud server 80, the present disclosure is not limited thereto. For example, the first parameter obtaining unit 24a, the first degradation determining unit 25a, and the first control unit 26a may be included in the controller 20a or the MBMU 31 a.

Next, a description will be given of the operation of the distributed power storage system 2 in the present embodiment which is configured as illustrated in FIGS. 11 and 12.

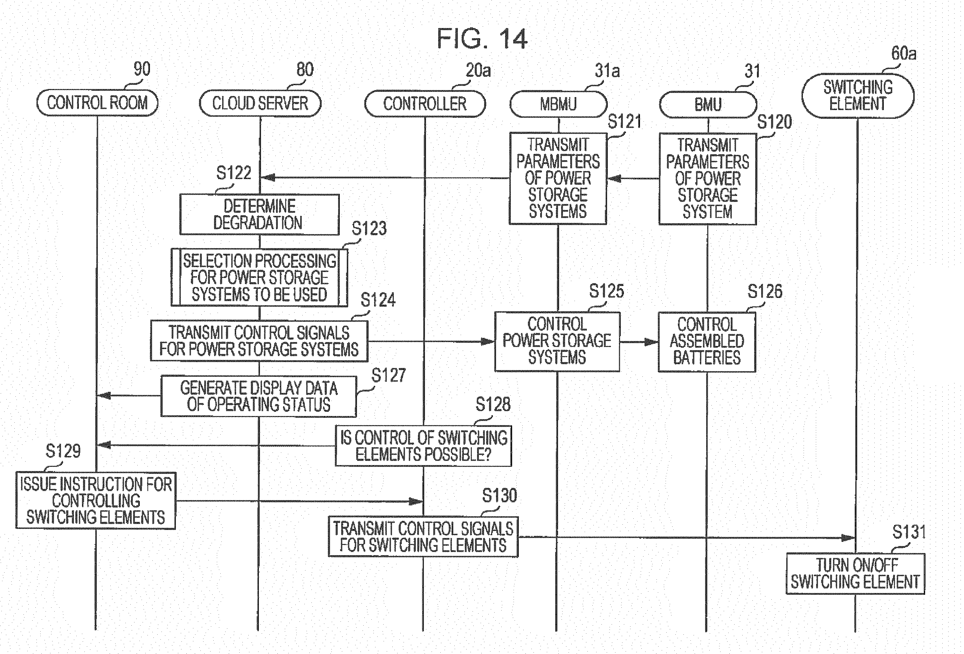

FIG. 14 is a sequence diagram illustrating a flow of overall processing in the second embodiment.

First, the BMU 31 in each power storage system 30 obtains, from the assembled batteries 34, pieces of parameter information indicating the respective states of the assembled batteries 34. More specifically, the BMU 31 obtains information regarding electrical currents, voltages, temperatures, SOCs, and times elapsed from the last charging of the respective assembled batteries 34. The BMU 31 may calculate SOHs, based on the electrical currents, the voltages, and the temperatures of the respective assembled batteries 34.

Each BMU 31 transmits the respective pieces of parameter information of the assembled batteries 34 to the MBMU 31a as parameter information of the power storage system 30 (S120).

The MBMU 31a transmits, to the cloud server 80, the pieces of parameter information of the power storage systems 30, the parameter information being received from the BMUs 31 in the power storage systems 30 (S121).

The first parameter obtaining unit 24a in the cloud server 80 obtains the pieces of parameter information detected from the power storage systems 30 and indicating the respective states of the power storage systems 30. By using the pieces of parameter information obtained by the first parameter obtaining unit 24a, the first degradation determining unit 25a in the cloud server 80 determines respective degradation levels of the power storage systems 30. Then, based on the determined degradation levels, the first degradation determining unit 25a groups the power storage systems 30 into a plurality of groups corresponding to the degradation levels (S122).

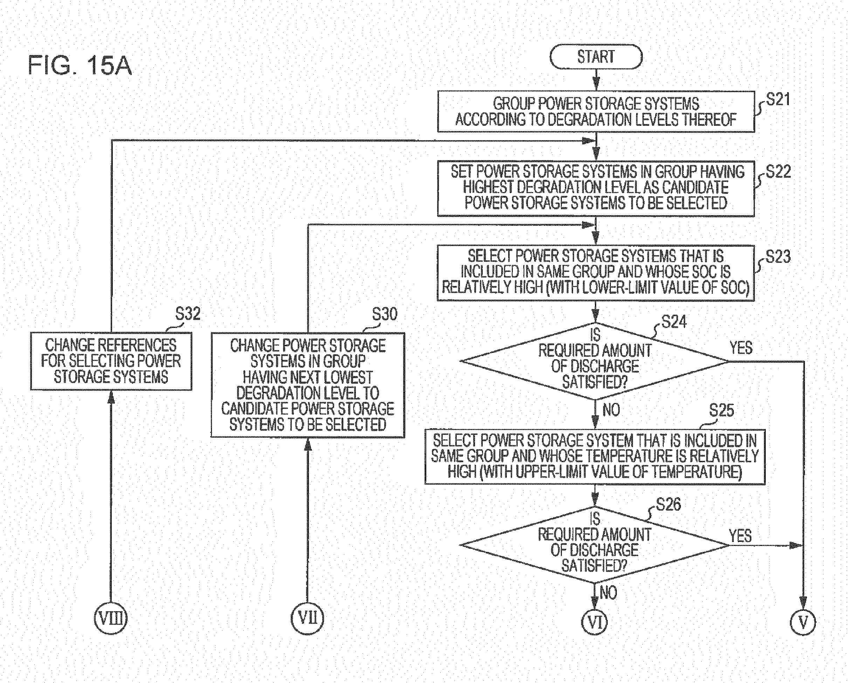

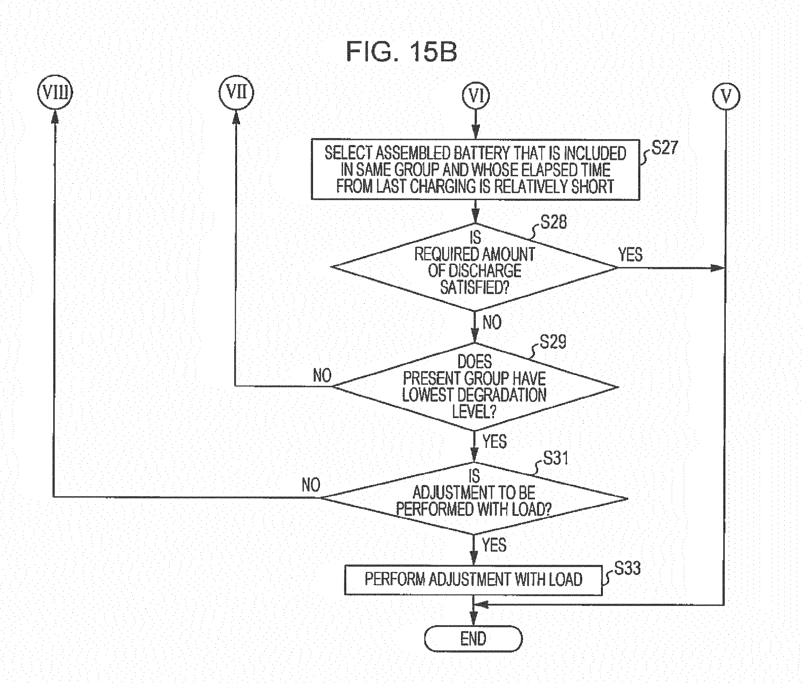

Next, in step S123, the following processing is performed. The first control unit 26a in the cloud server 80 executes at least one of first control and second control. In the first control, the groups of the power storage systems 30 are designated in descending order of priorities defined for the groups and corresponding to the degradation levels, and the power storage systems 30 belonging to each designated group are charged, and in the second control, the groups of the power storage systems 30 are designated in descending order of priorities defined for the groups and corresponding to the degradation levels, and the power storage systems 30 belonging to each designated group are discharged. In at least one of the first control and the second control, the first control unit 26a may select, as the power storage systems 30 to be operated, the power storage systems 30 that are included in the plurality of power storage systems 30 belonging to the designated group and whose parameter information satisfies a predetermined condition. In the first control, the first control unit 26a sets charging power values for the power storage systems 30 selected as the power storage systems 30 to be operated. In the second control, the first control unit 26a sets discharging power values for the power storage systems 30 selected as the power storage systems 30 to be operated. In the first control, the charging power values are set larger for the power storage systems 30 belonging to the group whose priority is higher among the designated groups. In the second control, the discharging power values are set larger for the power storage systems 30 belonging to the group whose priority is higher among the designated groups. A specific description is given below with reference to the flowchart illustrated in FIGS. 15A and 15B. In the first control, in the setting of the charging power values, the respective charging power values for the power storage systems 30 belonging to the same group are set so that the SOCs of the power storage systems 30 become equal to each other. In the second control, in the setting of the discharging power values, the respective discharging power values for the power storage systems 30 belonging to the same group are set so that the SOCs of the power storage systems 30 become equal to each other.

In the first control, in order to cause the power storage systems 30 to operate based on the charging power values set for the power storage systems 30 selected as the power storage systems 30 to be operated, the first control unit 26a transmits control signals for the power storage systems 30 to the MBMU 31a (S124). In the second control, in order to cause the power storage systems 30 to operate based on the discharging power value set for the power storage systems 30 selected as the power storage systems 30 to be operated, the first control unit 26a transmits control signals for the power storage systems 30 to the MBMU 31a (S124).

Based on the set charging power values, the MBMU 31a controls the amounts of charge in the power storage systems 30 (S125). Based on the set discharging power values, the MBMU 31 a controls the amounts of discharge in the power storage systems 30 (S125).

Based on the set charging power values, the BMU 31 controls the amounts of charge in the assembled batteries 34 (S126). Based on the set discharging power values, the BMU 31 controls the amounts of discharge in the assembled batteries 34 (S126).

The cloud server 80 modifies the obtained parameter information of the power storage systems 30 so that the parameter information can be displayed on the monitor of the PC in the control room 90, and transmits the modified data to the control room 90 (S127).

When the power supplied from the power storage systems 30 to the loads 70a is insufficient, the controller 20a controls the switching elements 60a to thereby reduce the amount of power supplied from the power storage systems 30. In order to ensure safety, the controller 20a notifies the control room 90 of whether or not the control of the switching elements 60a which is to be executed by the controller 20a is possible (S128).

Based on the information regarding the operating statuses of the power storage systems 30 and the control of the switching elements 60a which is to be executed by the controller 20a, the control room 90 issues an instruction for controlling the switching elements 60a to the controller 20a so that safety is ensured (S129).

In accordance with the instruction from the control room 90, the controller 20a transmits, to the switching elements 60a, control signals for the switching elements 60a (S130).

Each switching element 60a is turned on/off in accordance with the control signal for the switching element 60a (S131).

Although, in the present embodiment, the cloud server 80 performs the degradation determination and the selection processing for the power storage systems 30, the present disclosure is not limited thereto. For example, the controller 20a, the MBMU 31 a (or a configuration having a plurality of MBMUs 31a), or the individual BMUs 31 may realize at least one of the degradation determination and the selection processing for the power storage systems 30.

Also, units of the amount of discharge may be defined based on a power-conditioner performance characteristic (generally, the smaller the amount of discharge is, the lower the output efficiency of the power conditioner is) so as to allow the power storage system 30 that can perform discharging in the units of the amount of discharge to be selected with high priority.

Next, a method for selecting, in the present embodiment, the power storage systems 30 to be operated and the power storage systems 30 not to be operated will be described with reference to FIGS. 15A and 15B. Specifically, in the second control, based on the predetermined priorities for the groups, the groups are designated sequentially with the group having the highest priority first so that predetermined discharging power is obtained in the entire plurality of power storage systems 30. Of the power storage systems 30 belonging to the designated group, the power storage system 30 whose parameter information satisfies a predetermined condition may be selected as the power storage system 30 to be operated.

FIGS. 15A and 15B illustrate a flowchart of a method for selecting, in the second embodiment, the power storage systems 30 to be operated and the power storage systems 30 not to be operated. In the present embodiment, the power storage system 30 whose SOC, temperature, and elapsed time from the last charging of the respective pieces of parameter information of the power storage systems 30 satisfy a predetermined condition is selected. However, it is sufficient as long as the power storage system 30 whose at least one of the temperature, the SOC, the last charging time, and the last discharging time satisfies a predetermined condition is selected as the power storage system 30 to be operated. When the power storage system 30 whose elapsed time from the last discharging is long is selected with high priority, suppression of the calendar life degradation is facilitated, and thus long life of the power storage systems 30 can be expected. Conversely, when the power storage system 30 whose elapsed time from the last discharging is short is selected with high priority, the calendar life degradation increases, and thus the life of the power storage system 30 is shortened. Although, in the present embodiment, whether or not the power storage system 30 satisfies the predetermined condition is determined in order of the SOC, the temperature, and the elapsed time from the last charging, the present disclosure is not limited thereto. For example, whether or not the power storage system 30 satisfies the predetermined condition may be determined in order of the temperature, the SOC, the elapsed time from the last charging.

In the present embodiment, the power storage system 30 is selected so as to allow short life operation with which the replacement timing of the power storage systems 30 can be controlled and the power storage systems 30 can be easily replaced.

First, in accordance with the degradation levels of the power storage systems 30, the power storage systems 30 are grouped (S21).

Next, the power storage systems 30 in the group having the highest degradation level are set as candidate power storage systems to be selected (S22).

Next, the power storage system 30 included in the same group and whose SOC is relatively high is selected as the power storage system 30 to be operated (S23). If the power storage system 30 whose SOC is low is selected as the power storage system 30 to be operated, it is difficult to satisfy the amount of discharge required by the loads 70a, and thus the SOC is a condition for selecting the power storage system 30. A lower-limit value may be set for the SOCs.

Next, a determination is made as to whether or not the amount of discharge required by the loads 70a is satisfied with the power storage system 30 included in the group to which the power storage systems 30 set as candidate power storage systems to be selected belong and selected as the power storage system 30 to be operated (S24).

If the amount of discharge required by the loads 70a is not satisfied with the power storage system 30 included in the group to which the power storage systems 30 set as candidate power storage systems to be selected belong and selected as the power storage system 30 to be operated (NO in S24), the power storage system 30 included in the same group and whose temperature is relatively high is further selected as the power storage system 30 to be operated (S25). When the power storage systems 30 are used at high temperatures, degradation of each power storage system 30 is promoted, and thus, the temperature is a condition for selecting the power storage system 30. An upper-limit value may also be set for the temperature. For example, the power storage system 30 whose temperature is higher than or equal to a predetermined value may be selected as the power storage system 30 not to be operated, without being selected in step S27 described below.

Next, a determination is made as to whether or not the amount of discharge required by the loads 70a is satisfied with the power storage systems 30 included in the group to which the power storage systems 30 set as candidate power storage systems to be selected belong and selected as the power storage systems 30 to be operated (S26).

If the amount of discharge required by the loads 70a is not satisfied with the power storage systems 30 included in the group to which the power storage systems 30 set as candidate power storage systems to be selected belong and selected as the power storage systems 30 to be operated (NO in S26), the power storage system 30 included in the same group and whose elapsed time from the last charging is relatively short is further selected as the power storage system 30 to be operated (S27). Since degradation of each power storage system 30 is promoted as the elapsed time from the last charging of the power storage system 30 increases, the elapsed time from the last charging is a condition for selecting the power storage system 30.

After S27, a determination is made as to whether or not the amount of discharge required by the loads 70a is satisfied with the power storage systems 30 included in the group to which the power storage systems 30 set as candidate power storage systems to be selected belong and selected as the power storage systems 30 to be operated (S28).

As described above, the amount of discharge in the power storage systems 30 selected as the power storage systems 30 to be operated is sequentially added up, and whether or not the amount of discharge required by the loads 70a is satisfied is determined in steps S24, S26, and S28.

If the amount of discharge required by the loads 70a is not satisfied with the power storage systems 30 included in the group to which the power storage systems 30 set as candidate power storage systems to be selected belong and selected as the power storage systems 30 to be operated (NO in S28), a determination is made as to whether or not the group to which the power storage systems 30 set as candidate power storage systems to be selected belong is the group having the lowest degradation level (S29). If the group to which the power storage systems 30 set as candidate power storage systems to be selected belong is the group having the lowest degradation level (NO in S29), the power storage systems 30 in the group having the next lowest degradation level are set as candidate power storage systems to be selected (S30). As described above, the group included in the plurality of groups is designated in descending order of priorities until predetermined discharging power is obtained in the entire plurality of power storage systems 30. That is, if the amount of discharge is not satisfied with the power storage systems 30 selected in steps S23, S25, and S27 thus far, the power storage systems 30 set as candidate power storage systems to be selected are changed to the power storage systems 30 in the group having a lower degradation level.

If the amount of discharge required by the loads 70a is not satisfied even when the selection processing is performed on the power storage systems 30 in all the groups (YES in S29), the user is queried about whether or not the loads 70a to which power is supplied are to be controlled with the switching elements 60a (S31). If the user decides that power is not to be supplied to any of the loads 70a (YES in S31), the load 70a for which he or she decided that power is not to be supplied is controlled with the corresponding switching element 60a, so that no power is supplied to the load 70a (S33). Even when the amount of discharge required by the loads 70a is not satisfied, if the user decides that power is to be supplied to the loads 70a (NO in S31), the references for selecting the power storage systems 30 are changed (S32). For example, the selection references, such as the lower-limit value of the SOC in step S23, the upper-limit value of the temperature in step S25, and so on are changed, so that a larger number of power storage systems 30 are selected as the power storage systems 30 to be operated.

Although, in the present embodiment, the power storage system 30 is selected so as to allow short life operation with which the replacement timing of the power storage systems 30 can be controlled and the power storage systems 30 can be easily replaced, the present disclosure is not limited thereto. For example, the power storage systems 30 may be selected so that the power storage systems 30 degrade equally and the entire plurality of power storage systems 30 can perform long life operation. In this case, the group having a low degradation level may be selected with high priority. Also, in the power storage systems 30 in the group, the assembled battery whose parameter information (e.g., the temperature) indicates that it is relatively less likely to degrade when operated may be selected with high priority. Although, in the present embodiment, the discharging power values are set so as to allow short life operation with which the replacement timing of the power storage systems 30 can be controlled and the power storage systems 30 can be easily replaced, the present disclosure is not limited thereto. For example, the discharging power values for the power storage systems 30 may be set so that the power storage systems 30 degrade equally and the entire plurality of power storage systems 30 can perform long life operation.

In the present embodiment, the power storage systems 30 are operated so that a specific one of the power storage systems 30 has a short life, and thus, the specific power storage system 30 degrades intensively, making it easier to replace the assembled batteries 34. In addition, when the distributed power storage system 2 is adapted so that the power storage systems 30 are selected so as to allow short life operation and the assembled batteries 34 included in the power storage systems 30 are selected so as to allow long life operation, it is easier to replace the entire group of assembled batteries 34 included in the specific power storage system 30 that has degraded. The selection of the power storage systems 30 and the assembled batteries 34 for the long life or short life operation may be performed in any combination. When a fault occurs, stopping degradation diagnosis and issuing a notification to an administrator or personnel of each power storage system 30 in descending order of degradation makes it easier to support a larger-scale power storage system 30.

In order to obtain predetermined discharging power in the entire plurality of power storage systems 30, the power storage system 30 for backup which is included in the plurality of power storage systems 30 may be operated in the range of the maximum operation rate of the backup power storage system 30. When no backup is needed, the backup power storage system 30 executes only charging without executing discharging.

In addition, when predetermined discharging power is not obtained in the entire plurality of power storage systems 30, the maximum operation rate of the backup power storage system 30 may be changed so that the predetermined discharging power is obtained in the entire plurality of power storage systems 30.

Although one example of control for discharging, involving the second control of the power storage systems 30, has been described in the example described above with reference to FIGS. 15A and 15B, control for charging, involving the first control of the power storage systems 30, may also be performed instead of the control for discharging in the above-described example.

Also, although, in the example described above with reference to FIGS. 15A and 15B, the power storage systems to be operated and the power storage systems not to be operated are selected based on the parameter information of the assembled batteries in the designated group, all of the power storage systems in the selected designated group may be operated without performing such selection.

In addition, the hardware configuration may be realized using a switch and so on so that power supply corresponding to the degradation level is performed for each of the assembled batteries 34 included in the power storage system 30 or so that power supply corresponding to the degradation level is performed for each power storage system 30.

As described above, in the power-storage-system control method and the power-storage-system control apparatus in the present embodiment, the power storage system 30 that satisfies a predetermined condition is selected for each group having a predetermined priority, and thus, the power storage system 30 can be controlled considering the life of the power storage systems 30.

Next, a description will be given of an operation in a case in which, in the first and second embodiments, when power is supplied from the power storage system 30 to the loads 70 or 70a, the degradation level(s) of at least one operating assembled battery 34 in the plurality of assembled batteries 34 included in the power storage system 30 exceeds a predetermined threshold.

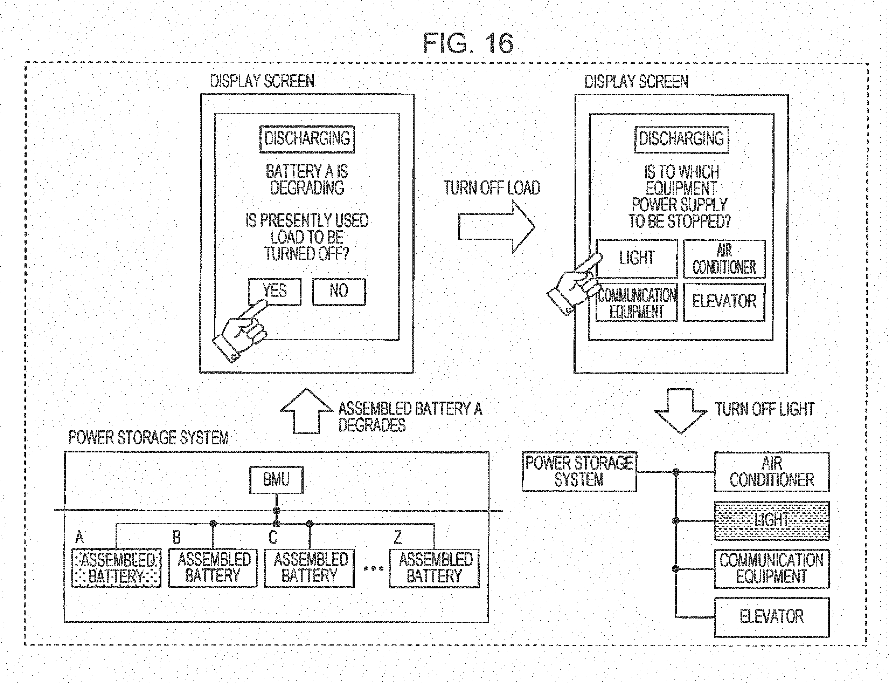

FIG. 16 illustrates an example of adjustment with loads. A display screen illustrated in FIG. 16 is an example of a display screen of the display device 40.

FIG. 16 illustrates an example of adjustment with the loads 70 in the first embodiment.

In FIG. 16, during supply of power from the power storage system 30 to the loads 70, when the degradation level of at least one operating assembled battery 34 in the plurality of assembled batteries 34 included in the power storage system 30 exceeds a predetermined threshold, a notification indicating that the degradation level of at least one assembled battery 34 has exceeded the predetermined threshold is issued. In FIG. 16, degradation of assembled battery A is detected, and the display device 40 receives, from the user, an instruction indicating whether the power supply from the power storage system 30 to the loads 70 is to be continued or stopped. In accordance with the received instruction, the power supply from the power storage system 30 to the loads 70 is continued or stopped. In FIG. 16, since the power supply is to be stopped, a list of the loads 70 connected to the power storage system 30 is displayed, and the user is made to select the load 70 for which the power supply may be stopped, in order to extend the life of the power storage system 30. In FIG. 16, power supply to a light is stopped. The user may assign priorities to the loads 70 in advance and information may be presented to the user so that the power supply to the loads 70 is regulated with the switching elements in ascending order of the priorities in order to ensure that the power supplied from the power storage system 30 satisfies the power of the loads 70.

Also, when the power supply from the power storage system 30 to the loads 70 is to be continued, the discharging power values set for the assembled batteries 34 are maintained or the discharging power value of at least one assembled battery 34 whose degradation level exceeds the predetermined threshold is set small and the discharging power value for the assembled battery 34 that is included in the plurality of assembled batteries 34 and whose degradation level does not exceed the predetermined threshold is set large. That is, the assembled batteries 34 are forced to operate to thereby continue the power supply from the power storage system 30 to the loads 70.

Although discharging has been mainly described above in the present disclosure, an upper-limit or lower-limit SOC and a power storage period (e.g., a few hours, a few days, a few weeks, or a few months) of the assembled batteries 34 to be used may be limited depending on an application. Such limitation makes it possible to suppress keeping the state of unnecessary charging for the power storage system 30 or the assembled batteries 34. Such an arrangement also makes it possible to suppress degradation of the power storage system 30 which is due to rapid discharging of the power storage system 30. The aforementioned "application" refers to power backup for demand response (an electric-power company performs discharging when 97% of its power supply capability is exceeded), an operating reserve (an electric-power company performs discharging when 100% of its power supply capability is exceeded), peak shaving/shifting, or a power failure. In the case of charging, the amount of power stored in the power storage system 30 or the assembled batteries 34 or the period of power storage thereof may be determined so as to allow long life operation or short life operation. For allowing long life operation, a larger amount of charge and a longer period of power storage are set for the power storage system 30 or assembled battery 34 having lower degradation. For allowing short life operation, a larger amount of charge and a longer period of power storage are set for the power storage system 30 or assembled battery 34 having higher degradation.

Also, when the number of assembled batteries 34 increases, the number of assembled batteries 34 that stand by increases, and thus the assembled batteries 34 are susceptible to an influence of calendar life degradation (in general, an influence of battery degradation due to calendar life degradation is larger than that due to cycle life degradation). Accordingly, reducing the amount of discharge in each assembled battery 34 and increasing the operating rate of the assembled batteries 34 making it possible to reduce an influence of calendar life degradation of the assembled batteries 34. Also, predicting a power demand, confirming that a required amount of charge is reserved, and managing at least one of the amounts of charge and the amounts of discharge so that the values of the SOCs of the assembled batteries 34 are maintained at the same low value makes it easier to suppress degradation of the power storage system 30. For example, the SOCs of the power storage systems 30 or the assembled batteries 34 during charging are maintained at about 50% at which the influence of calendar life degradation is small. Specifically, when the SOCs, the last charging times, and the last discharging times, in addition to information regarding the temperatures, are used to determine at least one of the amounts of charge and the amounts of discharge in the power storage systems 30 and the assembled batteries 34, and control is performed so that the values of the SOCs of the power storage systems 30 and the assembled batteries 34 are equal, degradation of the power storage systems 30 and the assembled batteries 34 can be suppressed. Although the above description has been given of batteries having the property that the calendar life degradation is larger than the cycle life degradation, it is not necessary to keep down the amounts of discharge when the influence of the calendar life degradation is small. Also, when the value of the SOC is large (e.g., when the value of the SOC exceeds 80%) or when the value of the SOC is small (e.g., when the value of the SOC falls below 20%), the influence of the cycle life degradation is likely to increase. Accordingly, when control is performed in terms of the system so that at least one of charging and discharging is not performed, suppression of degradation of the power storage systems 30 and the assembled batteries 34 can be expected.

The power-storage-system control method may be executed by a computer in the form of a program. Each constituent element in the power-storage-system control apparatus may be implemented by a general-purpose or dedicated circuit.

Although the power-storage-system control method and the power-storage-system control apparatus according to one aspect or a plurality of aspects have been described above in conjunction with the embodiments, the present disclosure is not limited to the embodiments. Modes obtained by applying various modifications conceived by those skilled in the art to the embodiments or modes constituted by combining constituent elements in different embodiments may also be encompassed by the scope of one or more aspects, as long as such modes do not depart from the subject matter of the present disclosure.

The present disclosure is applicable to various systems in which power is supplied from a power storage system to a group of loads. For example, the present disclosure may be used for a multi-unit residential complex, a community, a general household, a factory, an electric-power company, a power aggregator, or the like having a power storage system as a power supply.

## Claims

1. A power-storage-system control method for a power storage system having a plurality of assembled batteries, the method comprising:
obtaining parameter information indicating respective states of the assembled batteries;
determining respective degradation levels of the assembled batteries by using the obtained pieces of parameter information;
grouping the assembled batteries into a plurality of groups, based on the determined degradation levels; and
executing at least one of first control and second control, wherein in the first control, group designation is performed in first descending order of priorities defined for the groups and corresponding to the degradation levels, and the assembled batteries belonging to the designated group are charged, and in the second control, group designation is performed in second descending order of priorities defined for the groups and corresponding to the degradation levels, and the assembled batteries belonging to the designated group are discharged.

2. The power-storage-system control method according to claim 1,
wherein, in the first control, a group included in the plurality of groups is designated in the first descending order of the priorities until predetermined charging power is obtained in the power storage system; and
wherein, in the second control, a group included in the plurality of groups is designated in the second descending order of the priorities until predetermined discharging power is obtained in the power storage system.

3. The power-storage-system control method according to claim 2,
wherein, in the first control, charging power values are set for the assembled batteries in each designated group,
the charging power values being set larger for the assembled batteries belonging to the group whose priority is higher among the designated groups; and
wherein, in the second control, discharging power values are set for the assembled batteries in each designated group,
the discharging power values being set larger for the assembled batteries belonging to the group whose priority is higher among the designated groups.

4. The power-storage-system control method according to claim 2 or 3,
wherein, in the second control, the assembled batteries belonging to a first group having whose priority is highest are operated, a determination is made as to whether or not power that is suppliable from the power storage system satisfies power required by a load, a second group whose priority is lower than the priority of the first group is designated when the suppliable power does not satisfy the power required by the load, and the assembled batteries belonging to the designated first group and second group are used to discharge power.

5. The power-storage-system control method according to any one of claims 1-4,
wherein, during supply of power from the power storage system to a load, when the power supplied from the power storage system becomes lower than power required by the load, the power supply to the load is stopped.

6. The power-storage-system control method according to any one of claims 1-4,
wherein, during supply of power from the power storage system to a plurality of loads, when the power supplied from the power storage system becomes lower than power required by the loads, the power supplied to the load included in the plurality of loads is stopped in ascending order of priorities defined for the loads.

7. The power-storage-system control method according to any one of claims 1-6,
wherein, in at least one of the first control and the second control, of the assembled batteries belonging to the designated group, an assembled battery whose parameter information satisfies a predetermined condition is selected as an assembled battery to be operated.

8. The power-storage-system control method according to any one of claims 1-7,
wherein an assembled battery whose at least one of a temperature, a state of charge (SOC), a last charging time, and a last discharging time satisfies a predetermined condition is selected as an assembled battery to be operated, the temperature, the SOC, the last charging time, and the last discharging time being included in the parameter information.

9. The power-storage-system control method according to any one of claims 1-8,
wherein, in the first control, in setting of charging power values for the assembled batteries, the charging power values for the assembled batteries belonging to the same group are set so that SOCs of the assembled batteries become equal to each other; and
wherein, in the second control, in setting of discharging power values for the assembled batteries, the discharging power values for the assembled batteries belonging to the same group are set so that SOCs of the assembled batteries become equal to each other.

10. The power-storage-system control method according to any one of claims 1-9,
wherein a frequency of obtaining the parameter information from the assembled batteries belonging to the group having a higher degradation level among the plurality of groups is increased.

11. The power-storage-system control method according to any one of claims 1-10,
wherein, during supply of power from the power storage system to a load, when a degradation level of at least one operating assembled battery of the assembled batteries included in the power storage system exceeds a predetermined threshold,
a notification indicating that the degradation level of the at least one assembled battery has exceeded the predetermined threshold is issued,
an instruction indicating whether the power supply from the power storage system to the load is to be continued or stopped is received, and
the power supply from the power storage system to the load is continued or stopped in accordance with the received instruction.

12. The power-storage-system control method according to claim 11, wherein, when the power supply from the power storage system to the load is continued, the discharging power values set for the assembled batteries are maintained or the discharging power value for the at least one assembled battery whose degradation level exceeds the predetermined threshold is set to a first value and the discharging power value for the assembled battery that is included in the plurality of assembled batteries and whose degradation level does not exceed the predetermined threshold is set to a second value lager than the first value.

13. The power-storage-system control method according to any one of claims 1-12,
wherein an instruction indicating whether at least one of charging power values and discharging power values for the assembled batteries belonging to the group having a higher degradation level among the plurality of groups is to be set small or large is received, and
in accordance with the received instruction, at least one of the charging power values and the discharging power values is set.

14. A power-storage-system control method for controlling, through a communications network, power storage systems arranged in a distributed manner, the method comprising:
obtaining pieces of first parameter information indicating respective states of the power storage systems;
determining respective degradation levels of the power storage systems by using the obtained pieces of first parameter information;
grouping the power storage systems into a plurality of groups, based on the determined degradation levels; and
executing at least one of first control and second control, wherein, in the first control, group designation is performed in first descending order of priorities defined for the groups of the power storage systems and corresponding to the degradation levels, the power storage systems belonging to the designated group are charged, and in the second control, group designation is performed in second descending order of priorities defined for the groups of the power storage systems and corresponding to the degradation levels, and the power storage systems belonging to the designated group are discharged.

15. The power-storage-system control method according to claim 14, wherein pieces of second parameter information indicating respective states of assembled batteries included in each of the power storage systems are obtained from the assembled batteries;
respective second degradation levels of the assembled batteries are determined using the obtained pieces of second parameter information;
the assembled batteries are grouped into a plurality of groups, based on the degradation levels determined for the respective assembled batteries; and
at least one of first control and second control is executed, wherein, in the first control, group designation is performed in the first descending order of priorities defined for the groups of the assembled batteries and corresponding to the degradation levels, and the assembled batteries belonging to the designated assembled-battery group are charged, and in the second control, group designation is performed in the second descending order of priorities defined for the groups of the assembled batteries and corresponding to the degradation levels, and the assembled batteries belonging to the designated assembled-battery group are discharged.

16. The power-storage-system control method according to claim 14 or 15,
wherein a power storage system for backup which is included in the plurality of power storage systems is operated in a range of a maximum operation rate of the backup power storage system so that predetermined discharging power is obtained in the entire plurality of power storage systems.

17. The power-storage-system control method according to claim 16,
wherein, when the predetermined discharging power is not obtained in the entire plurality of power storage systems, the maximum operation rate of the backup power storage system is changed so that the predetermined discharging power is obtained in the entire plurality of power storage systems.

18. A power-storage-system control apparatus for controlling, through a communications network, power storage systems arranged in a distributed manner, the apparatus comprising:
a first parameter obtainer that obtains pieces of first parameter information indicating respective states of the power storage systems;
a first degradation determiner that determines respective degradation levels of the power storage systems by using the obtained pieces of first parameter information and that groups the power storage systems into a plurality of groups, based on the degradation levels; and
a first controller that executes at least one of first control and second control, wherein, in the first control, group designation is performed in first descending order of priorities defined for the groups of the power storage systems and corresponding to the degradation levels, the power storage systems belonging to the designated group are charged, and in the second control, group designation is performed in second descending order of priorities defined for the groups of the power storage systems and corresponding to the degradation levels, and the power storage systems belonging to the designated group are discharged.

19. A power-storage-system control apparatus for controlling a power storage system having a plurality of assembled batteries, the apparatus comprising:
a second parameter obtainer that obtains pieces of second parameter information indicating respective states of the assembled batteries;
a second degradation determiner that determines respective degradation levels of the assembled batteries by using the obtained pieces of second parameter information and that groups the assembled batteries into a plurality of groups, based on the degradation levels; and
a second controller that executes at least one of first control and second control, wherein, in the first control, group designation is performed in first descending order of priorities defined for the groups of the assembled batteries and corresponding to the degradation levels, and the assembled batteries belonging to the designated group are charged, and in the second control, group designation is performed in second descending order of priorities defined for the groups of the assembled batteries and corresponding to the degradation levels, and the assembled batteries belonging to the designated group are discharged.
